# EUROPEAN PATENT SPECIFICATION

(11) **EP 3 798 123 B1**
(45) Date of publication and mention of the grant of the patent: **01.05.2024**
(21) Application number: 20203070.6
(22) Date of filing: 18.03.2015
(51) Int. Cl.: B64C 27/28, B64C 27/08, B64C 11/28, B64C 27/30, B64C 29/00, B64C 27/50, B64C 27/06

(54) **AERODYNAMICALLY EFFICIENT LIGHTWEIGHT VERTICAL TAKE-OFF AND LANDING AIRCRAFT WITH PIVOTING ROTORS AND STOWING ROTOR BLADES**
AERODYNAMISCH EFFIZIENTES LEICHTES SENKRECHTSTART- UND LANDELUFTFAHRZEUG MIT SCHWENKBAREN ROTOREN UND VERSETZTEN ROTORBLÄTTERN
AÉRONEF À DÉCOLLAGE ET ATTERRISSAGE VERTICAUX, LÉGER ET PERFORMANT, COMPRENANT DES ROTORS PIVOTANTS ET DES PALES DE ROTOR ESCAMOTABLES

(30) Priority: 18.03.2014 US 201414218845; 17.03.2015 US 201514660771; 17.03.2015 US 201514660838
(43) Date of publication of application: 31.03.2021
(62) Divisional of application: 15765196.9
(73) Proprietor: Joby Aero, Inc., Santa Cruz, CA 96050 (US)
(72) Inventor: BEVIRT, JoeBen, Santa Cruz, CA 96050 (US); STOLL, Alex, Santa Cruz, CA 96050 (US)
(74) Representative: Hofstetter, Schurack & Partner

(56) References cited:
- EP-A1- 2 570 345
- WO-A2-2010/024593
- DE-A1-102012 104 783
- US-A- 3 081 964
- US-A- 3 159 361
- US-A- 3 592 412
- US-A1- 2010 270 435

## Description

### BACKGROUND

### Field of the Invention

This invention relates to powered flight, and more specifically to a vertical take-off and landing aircraft with pivoting rotors and stowing rotor blades.

### Description of Related Art

There are generally three types of vertical takeoff and landing (VTOL) configurations: wing type configurations having a fuselage with rotatable wings and engines or fixed wings with vectored thrust engines for vertical and horizontal translational flight; helicopter type configuration having a fuselage with a rotor mounted above which provides lift and thrust; and ducted type configurations having a fuselage with a ducted rotor system which provides translational flight as well as vertical takeoff and landing capabilities.

The amount of thrust required to take-off in a vertical take-off scenario greatly exceeds the thrust needed to keep the same vehicle aloft during forward flight, when the wings are providing lift. The amount of thrust required to transition from a vertical take-off mode to horizontal, forward, flight mode may also be quite high. Thus, there may be a mismatch between the power requirements if there are not possibilities to change power delivery paradigms during flight. WO 2010/024593 A2 and US 2010/270435 disclose (Vertical Takeoff and Landing) aircraft. US 2010/270425 A1 shows a tilt-rotor aircraft. EP 2 570 345 A1 discloses an aircraft with at least one wing and at least three engines having a vertical thrust direction. Further, US 3 159 361 A shows a fixed wing aircraft.

In order to provide efficiency in both vertical take-off and forward flight modes, improvements to past systems must be made. What is called for is a vertical take-off and landing aircraft that incorporates efficiencies into all use modes.

### SUMMARY

The invention is directed to a method for operating an aerial vehicle with the features of claim 1 and an aerial vehicle comprising the features of claim 9.

### BRIEF DESCRIPTION OF THE DRAWINGS

Figure 1 is a perspective view of an aerial vehicle in forward flight, not falling within the scope of the claims.
Figure 2 is a side view of the exemplary aerial vehicle in a forward flight configuration.
Figure 3 is a top view of the exemplary aerial vehicle in a forward flight configuration, not falling within the scope of the claims.
Figure 4 is a front view of the exemplary aerial vehicle in a forward flight configuration.
Figure 5 is a perspective view of the exemplary aerial vehicle in takeoff configuration.
Figure 6 is a front view of the exemplary aerial vehicle in takeoff.
Figure 7 is a side view of the exemplary aerial vehicle in takeoff configuration.
Figure 8 is a perspective view of the exemplary aerial vehicle in a transition configuration.
Figure 9 is a sequence of views illustrating transition of the wing.
Figure 10 is a perspective view of the exemplary aerial vehicle in forward flight with wing rotor blades stowed.
Figure 11 is a front view of the exemplary aerial vehicle in a forward flight configuration with wing rotor blades stowed.
Figure 12 is a top view of an exemplary aerial vehicle in a forward flight configuration with wing rotor blades stowed, not falling within the scope of the claims.
Figure 13 is a side view of the exemplary aerial vehicle in a forward flight configuration with wing rotor blades stowed.
Figure 14 is a perspective view of a wing rotor with the front cover removed for clarity according to some embodiments of the present invention.
Figure 15 is a front view of a wing rotor with the front cover removed for clarity according to some embodiments of the present invention.
Figure 16 is a side view of a wing rotor with its blades deployed according to some embodiments of the present invention.
Figure 17 is a side view of a wing rotor with its blades stowing according to some embodiments of the present invention.
Figure 18 is a side view of a wing rotor with its blades stowing according to some embodiments of the present invention.
Figure 19 is a side view of a wing rotor with its blades stowing according to some embodiments of the present invention.
Figure 20 is a side view of a wing rotor with its blades stowed according to some embodiments of the present invention.
Figure 21 is a perspective view of a tail rotor according to some embodiments of the present invention.
Figure 22 is a side view of a tail rotor in a forward flight configuration according to some embodiments of the present invention.
Figure 23 is a side view of a tail rotor in a take-off configuration to some embodiments of the present invention.
Figure 24 is a side view of a tail rotor and its deployment mechanism in a stowed configuration according to some embodiments of the present invention.
Figure 25 is a side view of a tail rotor and its deployment mechanism moving from a stowed configuration according to some embodiments of the present invention.
Figure 26 is a side view of a tail rotor and its deployment mechanism moving from a stowed configuration according to some embodiments of the present invention.
Figure 27 is a side view of a tail rotor and its deployment mechanism in a deployed configuration according to some embodiments of the present invention.
Figure 28 is a front view of a tail rotor and its deployment mechanism in a deployed configuration according to some embodiments of the present invention.
Figure 29 is a perspective view of an aerial vehicle in take-off configuration according to an embodiment of the present invention.
Figure 30 is a front view of an aerial vehicle in take-off configuration according to an embodiment of the present invention.
Figure 31 is a side view of an aerial vehicle in take-off configuration according to an embodiment of the present invention.
Figure 32 is a top view of an aerial vehicle in take-off configuration according to an embodiment of the present invention.
Figure 33 is a perspective view of an aerial vehicle in a forward flight configuration according to a second embodiment of the present invention.
Figure 34 is a front view of an aerial vehicle in a forward flight configuration according to an embodiment of the present invention.
Figure 35 is a side view of an aerial vehicle in a forward flight configuration according to an embodiment of the present invention.
Figure 36 is a top view of an aerial vehicle in a forward configuration according to an embodiment of the present invention.
Figure 37 is a side view illustrating nested blades according to some embodiments of the present invention.
Figure 38 is a side view of a deployed rotor unit with rotor blades extended according to some embodiments of the present invention.
Figure 39 is a side view of rotor unit with two blade sets in a forward flight mode according to some embodiments of the present invention.
Figure 40 is a side view of rotor unit with two blade sets in a take-off mode according to some embodiments of the present invention.
Figure 41 is a front view of an electric motor according to some embodiments of the present invention.
Figure 42 is a partial view of a directional clutch in an electric motor according to some embodiments of the present invention.
Figure 43 is a partial view of a directional clutch in an electric motor according to some embodiments of the present invention.
Figure 44 is a partial cross-sectional view of directional clutches in an electric motor according to some embodiments of the present invention.
Figure 45 is a perspective view of an aerial vehicle in take-off configuration according to an embodiment of the present invention.
Figure 46 is a front view of an aerial vehicle in take-off configuration according to an embodiment of the present invention.
Figure 47 is a top view of an aerial vehicle in take-off configuration according to an embodiment of the present invention.
Figure 48 is a side view of an aerial vehicle in take-off configuration according to an embodiment of the present invention.
Figure 49 is a perspective view of an exemplary aerial vehicle not falling within the scope of the claims.
Figure 50 is a front view of the exemplary aerial vehicle in a take-off configuration.
Figure 51 is a top view of the exemplary aerial vehicle in a take-off configuration.
Figure 52 is a side view of the exemplary aerial vehicle in a take-off configuration.
Figure 53 is a perspective view of the exemplary aerial vehicle in a forward flight configuration.
Figure 54 is a top view of the exemplary aerial vehicle in a forward flight configuration.
Figure 55 is a front view of the exemplary aerial vehicle in a forward flight configuration.
Figure 56 is a side view of the exemplary aerial vehicle in a forward flight configuration.
Figure 57 is a perspective view of an exemplary aerial vehicle in a take-off configuration, not falling within the scope of the claims.
Figure 58 is a perspective view of the exemplary aerial vehicle in a forward flight configuration.
Figure 59 is a view of a stowing blade system in a deployed forward flight configuration according to some embodiments of the present invention.
Figure 60 is a perspective view of a stowing blade system in a stowed configuration according to some embodiments of the present invention.
Figure 61 is a front view of a stowing blade system in a stowed configuration according to some embodiments of the present invention.
Figure 62 is a partial view of a stowing blade system in a stowed configuration according to some embodiments of the present invention.
Figure 63 is a front partial view of a stowing blade system in a stowed forward flight configuration according to some embodiments of the present invention.
Figure 64 is a partial view of a stowing blade system in a stowed configuration according to some embodiments of the present invention.
Figure 64A is an illustration of a fin mount according to some embodiments of the present invention.
Figure 65 is a partial view of a stowing blade system in a stowed configuration according to some embodiments of the present invention.
Figure 66 is a side view of an exemplary blade stowed according to some embodiments of the present invention.
Figure 67 is a side view of an articulated mounting system in a forward flight configuration according to some embodiments of the present invention.
Figure 68 is a side view of an articulated mounting system in a take off configuration according to some embodiments of the present invention.
Figure 69 is a side view of an articulated mounting system in a transitioning configuration according to some embodiments of the present invention.
Figure 70 is a top view of an articulated mounting system in a transitioning configuration according to some embodiments of the present invention.
Figure 71 is a perspective view of an articulated mounting system in a transitioning configuration according to some embodiments of the present invention.
Figure 72 is a partial side view of an articulating mounting system with its blades deployed according to some embodiments of the present invention.
Figure 73 is a rear perspective view of an articulated mounting system according to some embodiments of the present invention.
Figure 74 is a partial view of the underside of a rotor hub according to some embodiments of the present invention.
Figure 75 is a partial side cutaway view of the stowing mechanics according to some embodiments of the present invention.
Figure 76 is a bottom perspective view of the rotor stowing mechanics according to some embodiments of the present invention.
Figure 77 is a front view of propeller blade positions according to some embodiments of the present invention.
Figure 78 is a side view of propeller blade positions according to some embodiments of the present invention.

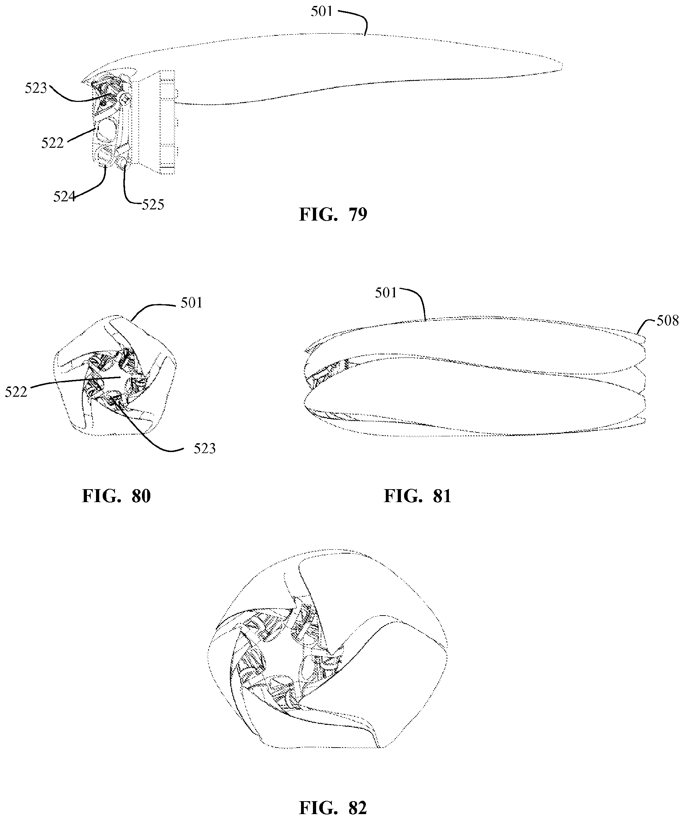

Figure 79 is a side partial view of aspects of a blade pivot system according to some embodiments of the present invention.
Figure 80 is a front view of stowed propeller blades according to some embodiments of the present invention.
Figure 81 is a side view of stowed propeller blades according to some embodiments of the present invention.
Figure 82 is a front perspective view of stowed propeller blades according to some embodiments of the present invention.
Figures 83A-C are views of a propeller system with different blade coning angles according to some embodiments of the present invention.
Figures 84A-F are illustrations of a blade strike according to some embodiments of the present invention.
Figure 85 is a side view of a rotor deployment mechanism in a stowed configuration according to some embodiments of the present invention.
Figure 86 is a side view of a rotor deployment mechanism in a deployed configuration according to some embodiments of the present invention.
Figures 87A-D illustrate views of an aerial vehicle from take-off to transition to forward flight according to some embodiments of the present invention.

### DETAILED DESCRIPTION

Although vertical takeoff and landing (VTOL) aircraft have always been desired, compromises in the realization of these aircraft have limited their usefulness and adoption to certain niches. The thrust needed for VTOL is significantly higher than the thrust needed to maintain horizontal flight. The vertical take-off thrust may also be needed during the transition to forward flight. Once moving in forward flight, the wings of the aircraft provide lift, supplanting a function delivered by motors during VTOL and during transition. Thrust producing elements needed during take-off, but not during forward flight, may be altered during forward flight such that they impart less drag onto the flying system.

The aerial vehicle uses bladed propellers powered by electric motors to provide thrust during take-off. The propeller/motor units may be referred to as rotor assemblies. The motor driven propeller units on the wings themselves rotate relative to a fixed wing, such that the propellers provide vertical thrust for take-off and landing. The rotation of the motor driven propeller units may allow for directional change of thrust by rotating both the propeller and the electric motor, thus not requiring any gimbaling, or other method, of torque drive around or through a rotating joint.

In some aspects, some or all of the wing mounted motor driven rotors are adapted to have the rotor blades fold back into a stowed position wherein the blades nest in recesses in the adjoining nacelle body after a transition to horizontal flight. The nested blades may result in a significantly lower drag of the aerial vehicle, while also allowing a significantly reduced power usage with only some of the rotors providing forward thrust.

In some aspects, extended nacelles with two coaxial propellers are used such that one of the propellers is used during forward flight, and another during vertical take-off and landing. The VTOL propeller may be adapted to nest its blades during forward flight. The extended nacelle resides at the tip of a wing, and optionally at the end of a rear V-tail element, and be adapted to rotate such that the VTOL propeller may provide vertical thrust during take-off and landing. In some aspects, each of the coaxial propellers has its own electric motor. In some aspects, the coaxial propellers are driven by the same electric motor. In some aspects, the electric motor has directional clutches such that one propeller is driven while the motor rotates in a first direction, and the other propeller is driven while the motor rotates in a second direction.

In some aspects, the motor driven rotors attached to the wing are adapted to place the mass of the motor and rotor significantly forward of the wing. This forward location allows for the rotation of the rotors to a vertical thrust orientation that has the airflow predominantly in front of the leading edge of the wing, reducing air flow impingement by the wing during VTOL operations. This forward location of the mass of the rotors and motors allows for unusual wing configurations, such as swept forward wings, whose otherwise possible drawbacks during higher g-force maneuvers are partially or fully moderated by this mass placement.

In some aspects, the mass balance of the aerial vehicle may be altered by movement of masses such as the battery mass. In some aspects, the battery mass may be adjusted to retain balance when a single vs. a multi -passenger load is supported. In some aspects, mass balance may be adjusted in automatic response to sensors within the aerial vehicle. In some aspects, the battery mass may be distributed between a two or more battery packs. The battery packs may be mounted such that their position may be changed during flight in response to changes in the balance of the aerial vehicle. In some aspects, the flight control system of the aerial vehicle may sense differential thrust requirements during vertical take-off and landing, and may move the battery mass in order to achieve a more balanced thrust distribution across the rotor assemblies. In some aspects, the battery mass may be moved should there be a failure of a rotor assembly during transition or vertical take-off and landing, again to balance the thrust demands of the various remaining functioning rotors.

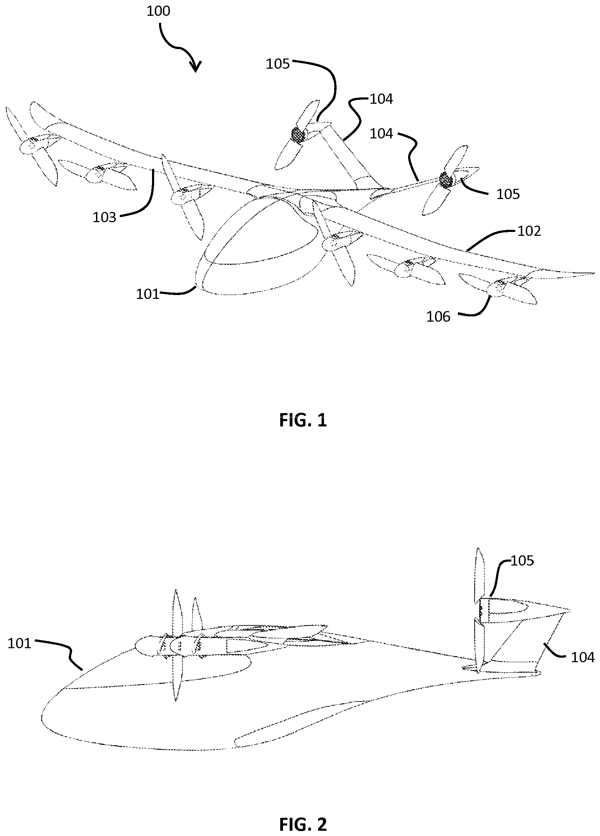

In an example not falling within the scope of the claims, as seen in Figures 1-4, an aerial vehicle 100 is seen in first forward flight configuration, as would be seen just after having transitioned from a vertical take-off configuration. In another forward flight mode, the blades of the wing mounted rotors will stow and nest, as discussed below. The aircraft body 101 supports a left wing 102 and a right wing 103. Motor driven rotor units 106 include propellers 107 which may stow and nest into the nacelle body. The aircraft body 101 extends rearward is also attached to raised rear stabilizers 104. The rear stabilizers have rear motors 105 attached thereto. In some aspects, the rear motors may also have front hubs, or spinners, which are omitted from some Figures for illustrative purposes.

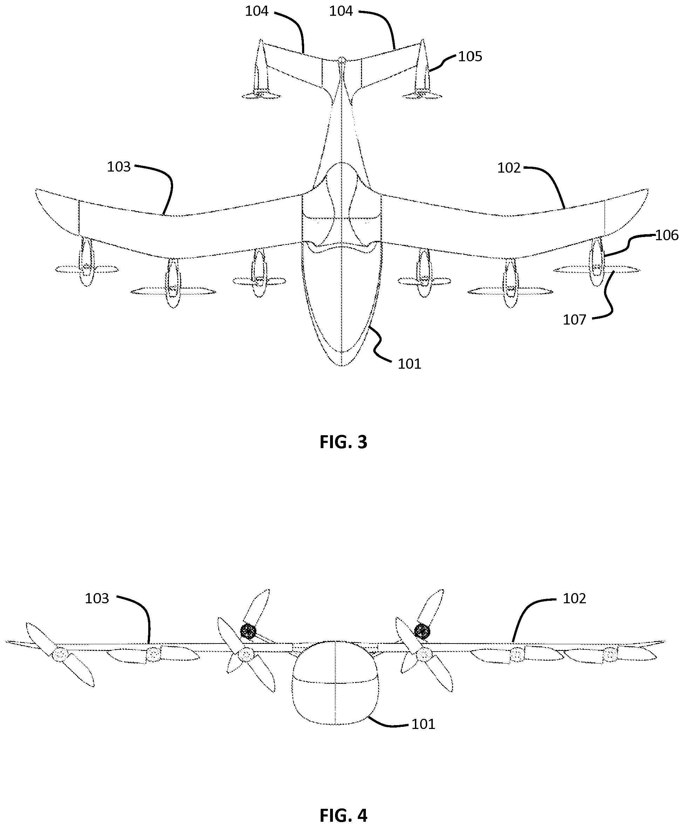

As seen in top view in Figure 3, the wings 102, 103 are partially swept forward. Exemplary aerial vehicles may include partially or wholly forward swept wings with spanwise distributed masses located forward of the leading edge. The divergent aeroelastic torsion commonly seen in forward-swept wing designs is substantially reduced by the presence of the masses cantilevered forward of the wing, which create opposing torque. As seen in Figures 2 and 3, the wing rotor assemblies 106 are mounted forward of the wing leading edge, and are also then forward of the neutral axis of the wing.

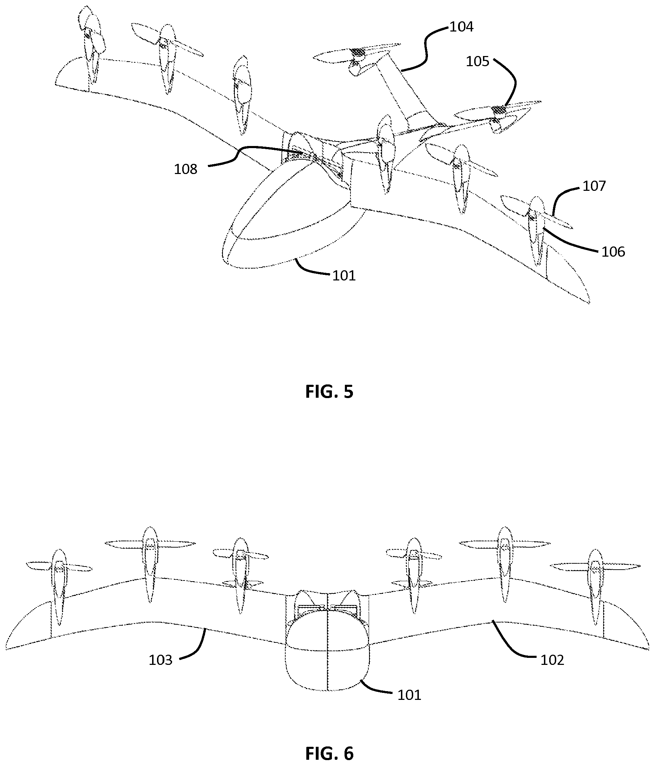

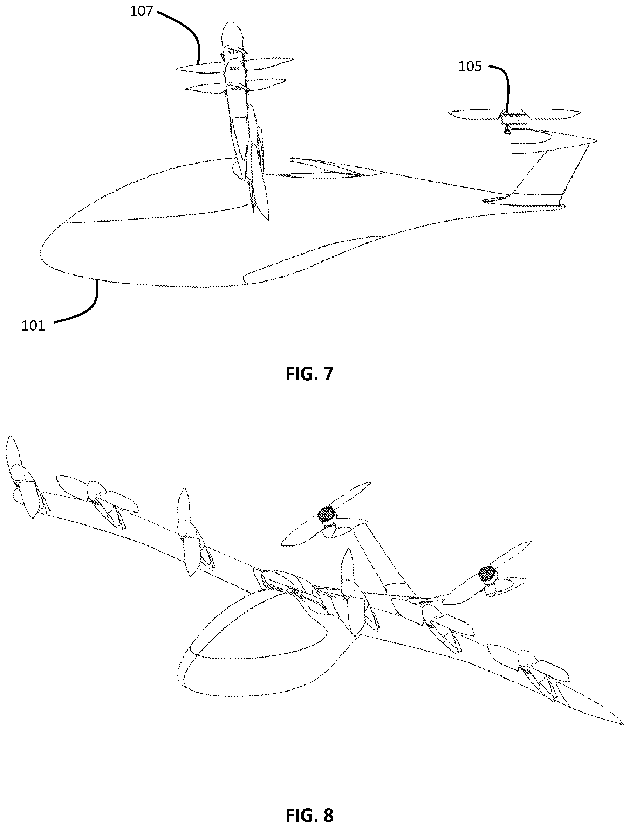

Figures 5-7 illustrate the aerial vehicle 100 in a vertical take-off and landing configuration such that the thrust of the rotors is directed upward. The wing 102, 103 have been rotated relative to the body 101 around a pivot 108. In some examples, wings are fixed to each other with structure that crosses through the vehicle body 101. As seen in side view in Figure 7, whereas the wing rotors 107 have had their thrust redirected for vertical take-off due to the rotation of the wing, the rear rotors 105 have had their thrust redirected due to their rotation relative to the rear stabilizers 104. Although referred to above as a pivot, the attachment of the wing to the aerial vehicle body may use a linkage adapted to maintain a forward position of the mass of the wing and rotor assemblies.

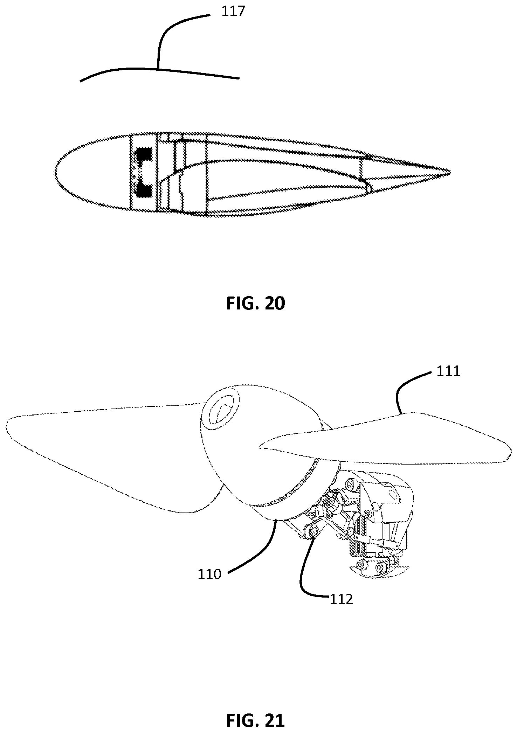

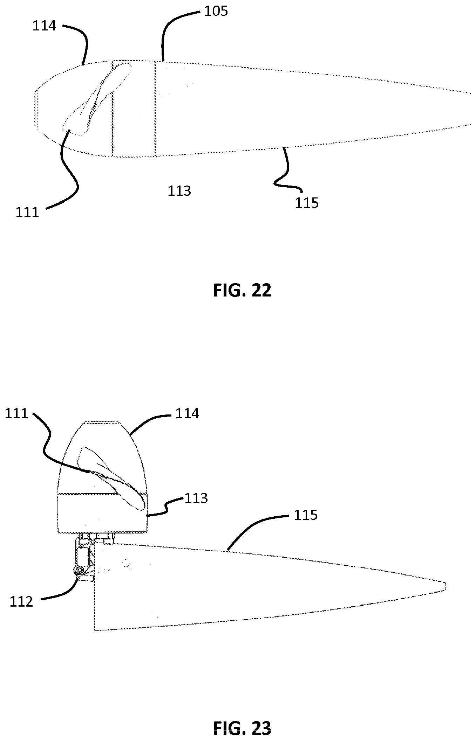

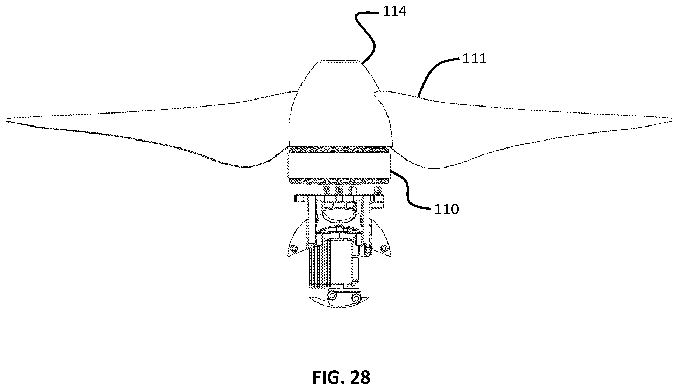

Figures 21-28 illustrate the configurations of the rear rotor. The deployment of a rear rotor from a stowed, forward flight, configuration to a deployed, vertical take-off, position, as well as a variety of intervening positions, may be achieved using a deployment mechanism which rotates the rotor relative to the rear stabilizers. Figure 22 illustrates a stowed, forward flight, configuration of rear rotor unit 105. The rear nacelle portion 115 may be rigidly mounted to a rear stabilizer in some embodiments. The spinner 114 and the motor cover 113 provide aerodynamic surfaces for the front portion of the nacelle. The propeller 111 extends through the spinner 114. In a fully deployed position, as seen in Figure 23, and in a partial front view in Figure 28, the motor 110, motor cover 113, spinner 114, and propeller 111 have rotated to a position adapted to provide vertical thrust. The electric motor/propeller combination being on the outboard side of the articulating joint allows for a rigid mounting of the propeller to the motor, which is maintained even as the propeller is moved through various attitudes relative to the rear nacelle portion. With such a configuration the rotating power from the motor need not be gimbaled or otherwise transferred across a rotating joint.

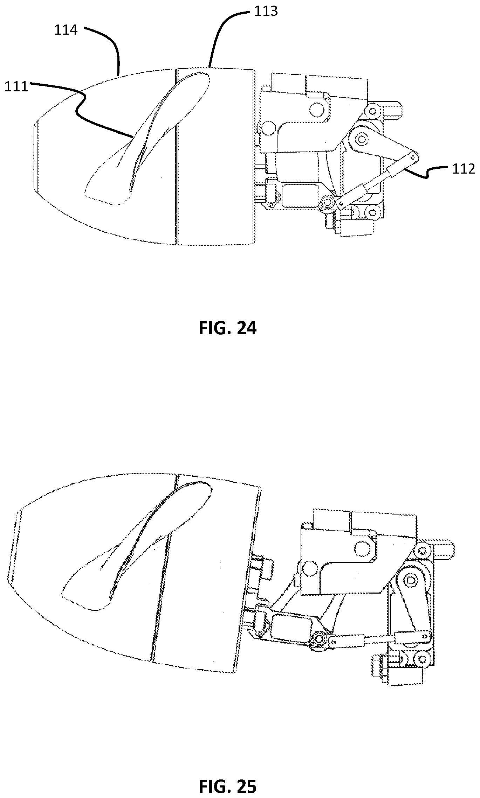

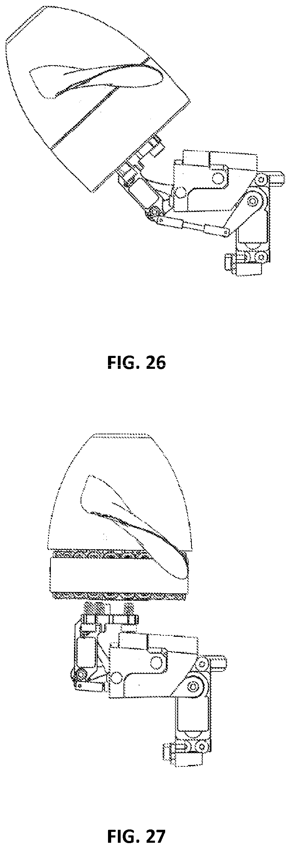

Figures 24-27 illustrate a sequence of positions of the motor and propeller relative to the rear nacelle, also to the rear tail structure of the aerial vehicle. As the articulating portion of the rear rotor unit begins its deployment, it can be seen in Figure 25 that the linkages first deploy the articulating portion forward, as opposed to merely pivoting around a single pivot point. The multi-bar linkage allows for the use of a single actuator for this complex deployment. Figure 26 illustrates the rear rotor unit as it does rise above the top of the rear nacelle, and achieves full deployment as seen in Figure 27. With the multi-bar linkage the motion of the articulating portion, which includes the motor, propeller, and spinner, is almost horizontal at the position of full deployment. As the thrust direction of the rotor is vertical in the fully deployed position, the actuator powering the deployment of the multi-bar linkage is not required to offset, or counteract, the thrust of the rotor.

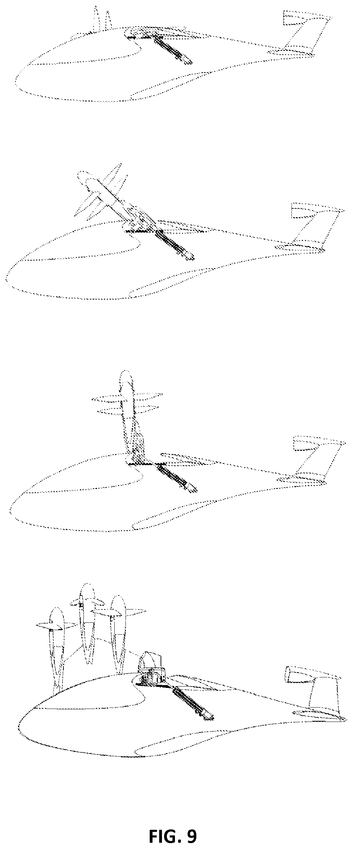

Figure 9 illustrates various positions of the wing and rear rotors as would be seen during transition from take-off to forward flight mode, or from forward flight mode to vertical take-off and landing mode. After a vertical take-off, the rotors transition from a configuration providing vertical thrust through positions rotating towards the horizontal. As the forward speed of the aerial vehicle increases, the wings begin to generate lift such that not as much vertical thrust is needed to maintain altitude. With sufficient forward speed, lift is maintained by the wings and the thrust needed for forward flight is able to be provided by fewer rotors. In some aspects, the wings are raised to a vertical take-off configuration with the use of a linkage adapted to slide the wing pivot forward as the wing reaches deployment. This allows for a more favorable compromise in center of gravity location between VTOL and forward flight modes by locating the wing- mounted rotor assemblies farther forward in the VTOL configuration.

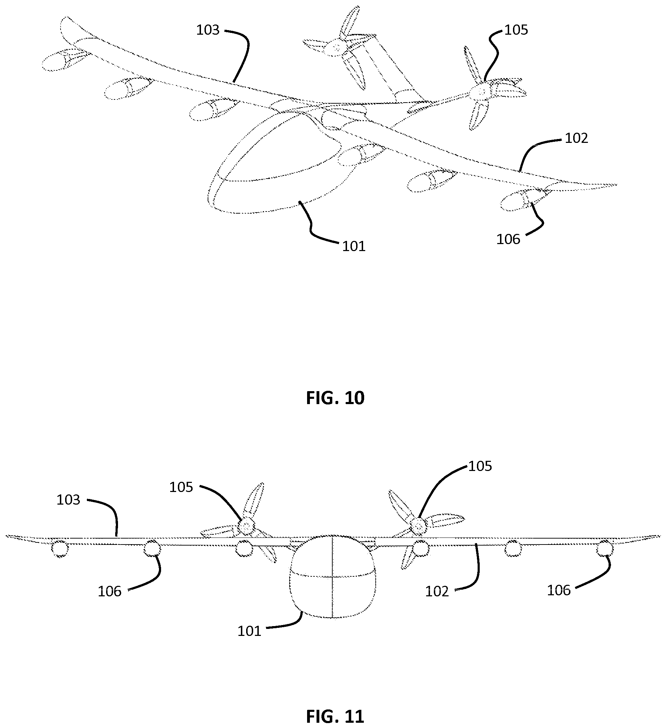

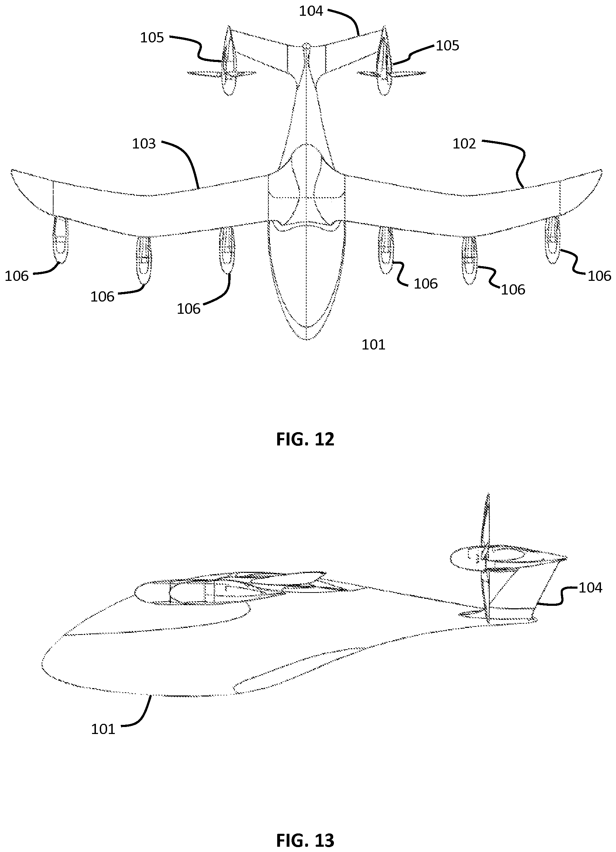

Figures 10-13 illustrate a forward flight configuration of the aerial vehicle 100. The propeller blades of the wing mounted rotors 106 have been stowed and are nested within recesses along the nacelle. As forward flight requires significantly less thrust than required for vertical take-off, many of the individual motors and rotors may be deactivated during forward flight. To reduce drag, the blades may be folded back into a stowed position. To further reduce drag, the nacelles may have recesses such that the folded blades are adapted to nest within the recesses, creating a very low drag nacelle during forward flight. The rear rotors 105 may be used to provide forward thrust during this forward flight configuration.

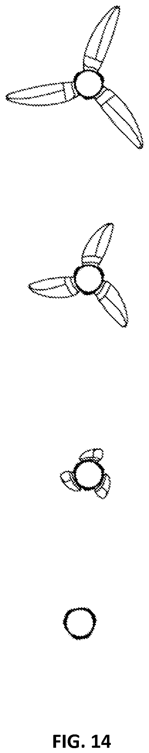

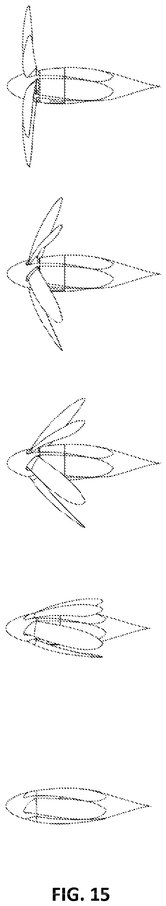

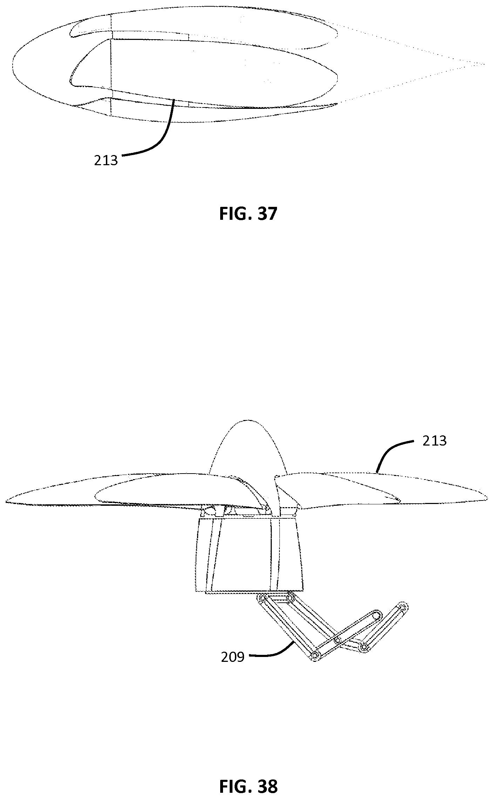

Figure 14 illustrates a front set of views of a stowing blade set as it stows from a fully deployed configuration to a fully stowed configuration. The blades nest into recesses along the nacelle such that the stowed blade set gives the effective wetted area of a simple nacelle. Figure 15 illustrates a wing mounted rotor unit according to some embodiments as it stows from a fully deployed configuration to a stowed configuration. Of note is that the rotor assembly, which may comprise an electric motor, the blade set, and the spinner, may itself deploy as a whole as seen in Figure 38, for example. In some aspects, the deployment of the rotor assembly utilizes a linkage, such as the linkage 209 of Fig. 38, which deploys the rotor to a vertical position while simultaneously pushing it forward and away from the remaining body of the nacelle. The push away from the remaining body of the nacelle reduces the download in the wing from the downwash of the associated rotor.

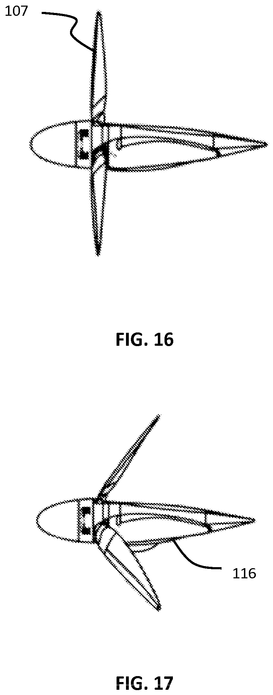

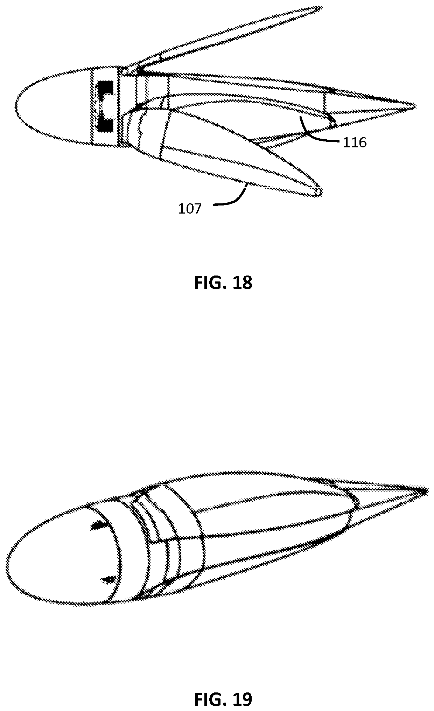

Figures 16-20 illustrate a sequence of positions as the blades 107 of a wing mounted rotor 106 fold down into a stowed position. Figure 16 illustrates the propeller blades 107 fully deployed, as would be used in vertical take-off and landing, and during transition to horizontal, forward, flight. Thus succeeding figures illustrate the blades 107 folding down to a stowed position. As seen in Figure 20, the blades 107 fit within recesses 116 in the nacelle resulting in a low drag configuration 117.

In an exemplary configuration, the aerial vehicle has 8 rotors and weighs 900kg. The rotor diameters are 1.3 meters, with a thrust per rotor of 1100 N. The continuous rpm of the motor at sea level is 1570 rpm, with a maximum of 1920 rpm. The wingspan is 8.5 meters. The battery mass is 320 kg, and the mass per motor is 20 kg. The cruise speed is 320 km/h. The continuous hover shaft power per motor is 29 kW.

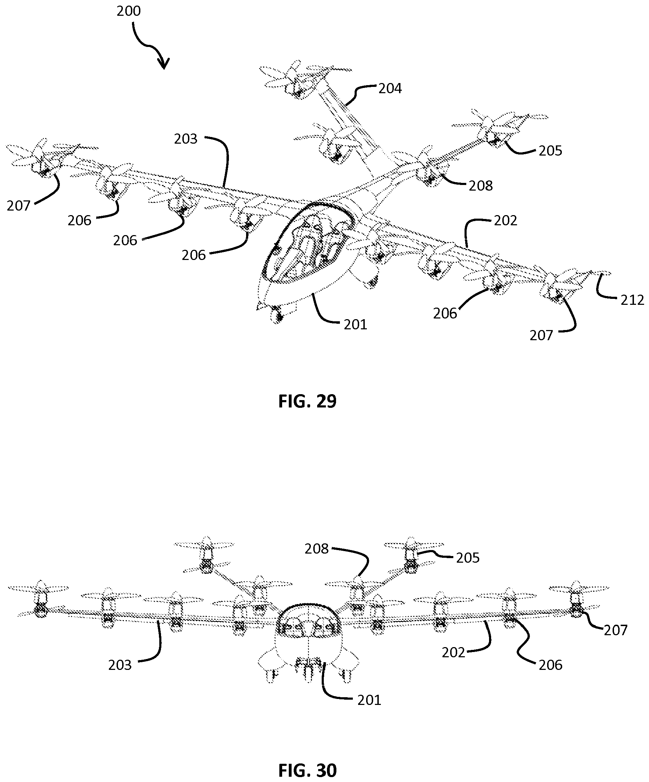

In an embodiment of the present invention, as seen in a vertical take-off configuration in Figures 29-32, an aerial vehicle 200 uses forward swept fixed wings 202, 203 with rotors of different types adapted for both vertical takeoff and landing and for forward flight. The aircraft body 201 supports a left wing 202 and a right wing 203. Motor driven rotor assemblies 206, 207 on the wings include propellers which may stow and nest into the nacelle body. The aircraft body 201 extends rearward is also attached to raised rear stabilizers 204. The rear stabilizers have rear rotor assemblies 205, 208 attached thereto. The aerial vehicle 200 is seen with two passenger seats side by side, as well as landing gear under the body 201. Although two passenger seats are illustrated, other numbers of passengers may be accommodated in differing embodiments of the present invention.

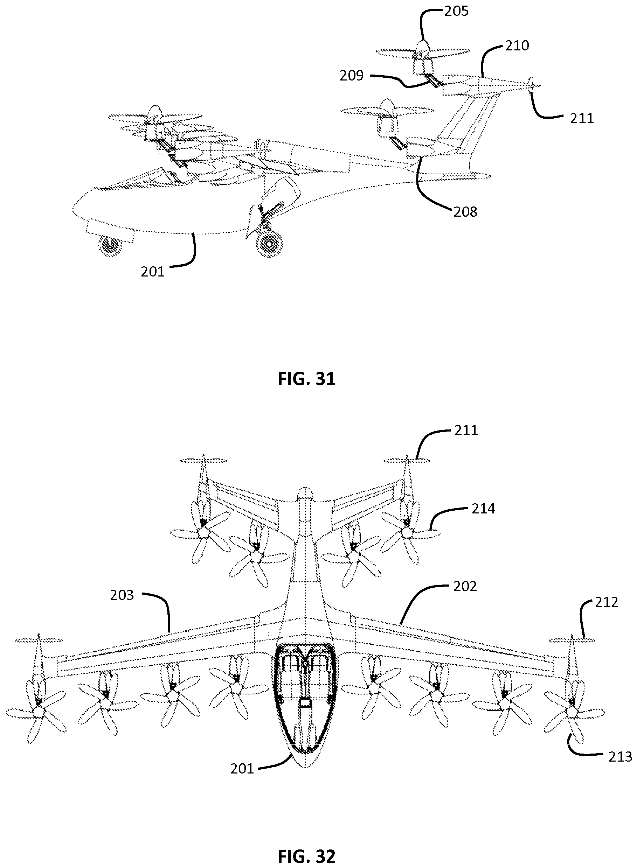

As seen in top view in Figure 32, the wings 202, 203 are swept forward. Aerial vehicles according to embodiments of the present invention may include swept wings with spanwise distributed masses located forward of the leading edge. The divergent aeroelastic torsion commonly seen in forward-swept wing designs is substantially reduced by the presence of the masses cantilevered forward of the wing, which create opposing torque. Also seen in the top view of Figure 32 is that the propellers of the wing mounted motor driven rotor units are extended forward with, and from, their nacelles such that the air flow in vertical take-off mode is not substantially interfered with by the wings. Similarly, the propellers of the rear stabilizer mounted motor driven rotor units are extended forward with, and from, their nacelles such that the air flow in vertical take-off mode is not substantially interfered with by the rear stabilizers. An illustration of the linkage that may be used to extend the rotors in the vertical configuration may be seen in Figure 38.

Another aspect of the forward swept wing configuration is that it allows for the wings 202, 203 to be mounted to the body 201 somewhat rearward of where they may have attached otherwise. The rearward attachment allows for a spar connecting the wings to traverse the interior of the aerial vehicle body to the rear of the passenger seats. A further aspect of the forward swept wing with articulating rotors in VTOL mode is the forward stagger of the vertical rotors, which improves longitudinal control authority in vertical and transitional flight for a given wing root location by lengthening the moment arm of these rotors about the center of gravity. This is especially helpful in the case of a failure in one of the rear mounted rotors during VTOL modes. Additionally, the more even longitudinal rotor distribution effected by this configuration reduces the highest torque of the motors required to maintain level vertical flight in worst-case single motor or rotor failure eventuality, allowing the motor size to be reduced.

In some aspects, a portion of the wing mounted rotors may be adapted to be used in a forward flight configuration, while other wing mounted rotors may be adapted to be fully stowed during regular, forward, flight. The aerial vehicle 200 may have four rotors on the right wing 203 and four rotors on the left wing 202. Three of the rotor assemblies on each wing may have wing mounted rotors 206 that are adapted to flip up into a deployed position for vertical take-off and landing, to be moved back towards a stowed position during transition to forward flight, and then to have their blades stowed, and nested, during forward flight. The fourth rotor assembly 207 may include a second set of blades to be used for forward flight, as discussed below. Similarly, the each rear stabilizer 204 may be have two rotor units mounted to it, both of which are adapted to be used during vertical take-off and landing, and transition, modes, but one of which is adapted to be fully stowed as low drag nacelle during forward flight.

A multi-modal wing mounted rotor unit 207 is adapted to use a first set of blades 212 for forward flight, and a second set of blades 213 for VTOL and transitional flight modes. The forward flight blades 212 may be coaxial to the VTOL blades 213, and may be attached at different ends of the same nacelle. In the case wherein the VTOL blades are articulated to a vertical position for VTOL flight modes, there may be two motors within the nacelle, one for each blade set. Similarly, a multi -modal rear mounted rotor unit 210 is adapted to use a first set of blades 211 for forward flight, and a second set of blades 214 for VTOL and transitional flight modes. The forward flight blades 211 may be coaxial to the VTOL blades 214, and may be attached at different ends of the same nacelle. In the case wherein the VTOL blades are articulated to a vertical position for VTOL flight modes, there may be two motors within the nacelle, one for each blade set.

In some aspects, all of the blades used to provide thrust for VTOL and transitional modes are stowed during forward flight, and different blades are used to provide thrust during forward flight. In some aspects, a single motor is used to provide power for different blade sets depending upon whether VTOL or forward flight modes are being used. In some aspects, two blade sets are placed in a coaxial configuration such that they are supported by a single nacelle, for example.

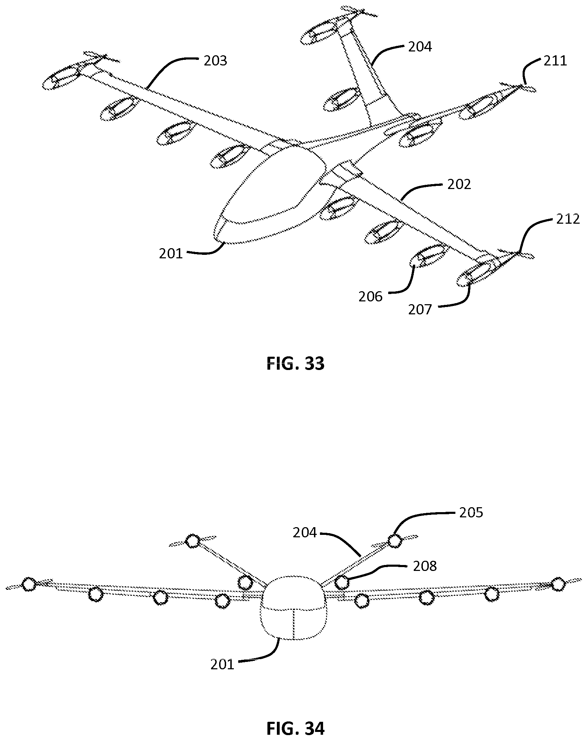

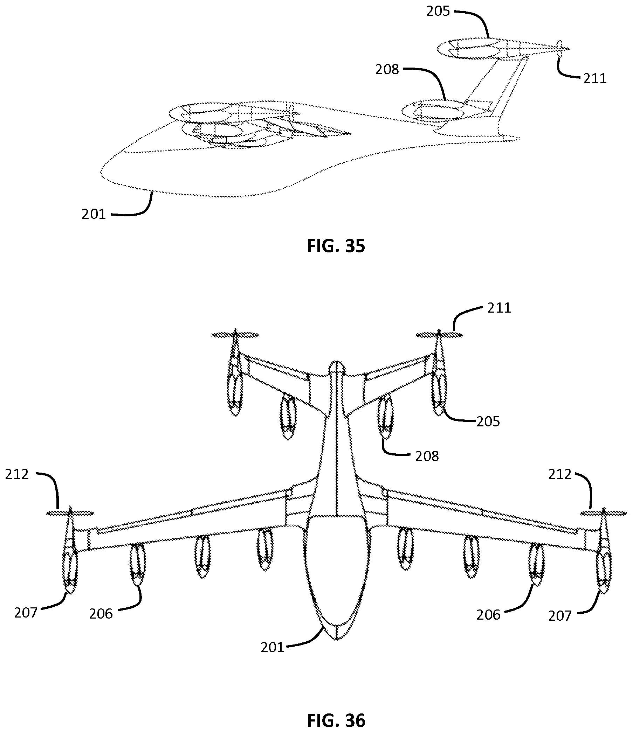

Figures 33-36 illustrate an aerial vehicle 200 in a forward flight mode wherein all of the VTOL blades have been stowed, and nested in recesses, such that the nacelles present low drag. In a forward flight mode, the wing mounted rotor units 206, 207 are seen with all of the VTOL blades stowed. Similarly, the rear mounted rotor units 205, 208 also have their VTOL blades stowed. The forward flight blade set 211 of the multi -modal rear rotor assemblies 205 and the forward flight blade set 212 of the multi -modal wing rotor assemblies 207 are used to provide thrust during forward flight.

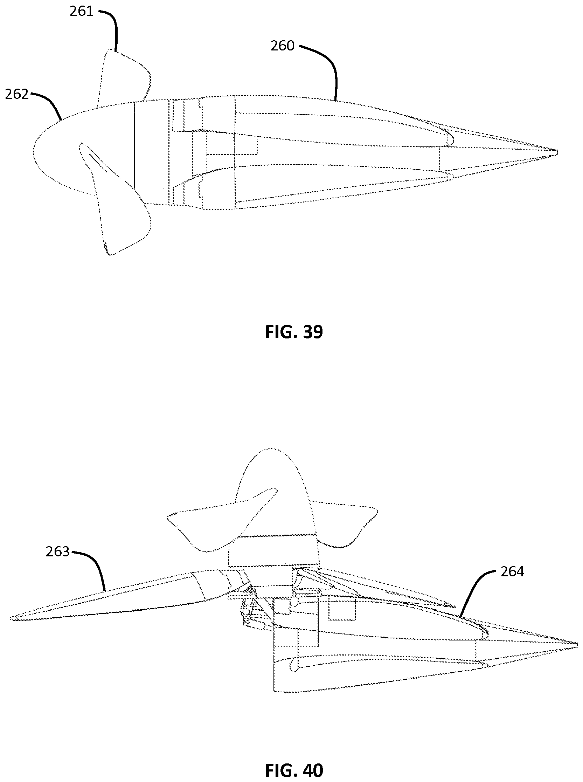

Figures 39 and 40 illustrate a motor and rotor unit 260 adapted to use a first set of blades 261 for a forward flight mode and a second set of blades 263 for VTOL and transition modes, in a coaxial configuration that shares a single motor for both blade sets. In this example, both blades are powered by the same electric motor. The electric motor may be adapted with directional clutches such that when the motor is rotated in a first direction the forward flight blades 261 are engaged, and the VTOL blades 263 are idled. During forward flight the VTOL blades 264 may stow and may nest in recesses 264. During VTOL and transition modes the motor may rotate in a second direction such that the VTOL blades 264 are engaged, and the forward flight blades 261 are disengaged. In the VTOL mode the motor and rotor assembly may be articulated such that the rotors and motor provide vertical thrust, with the entire motor and clutching unit, as well as both sets of blades, outboard of the positioning mechanism, such that no mechanical power related to blade thrust need traverse the gimbaled joint.

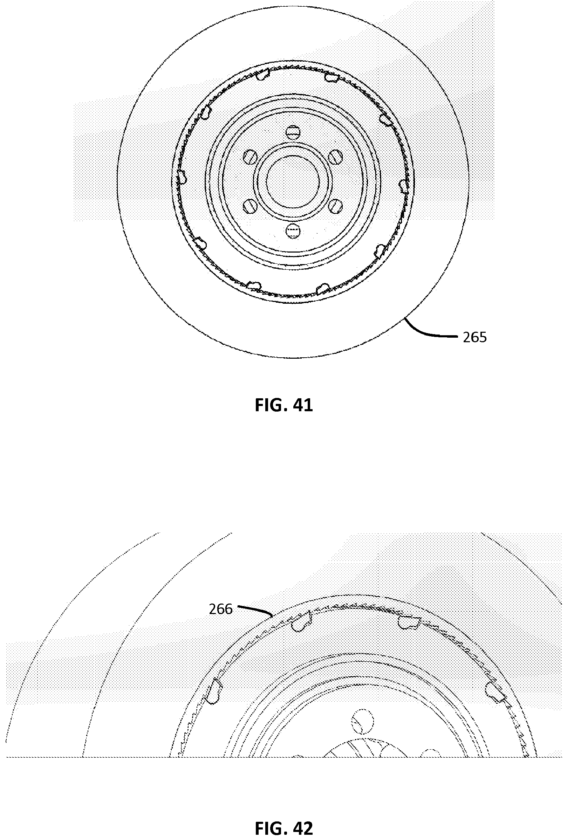

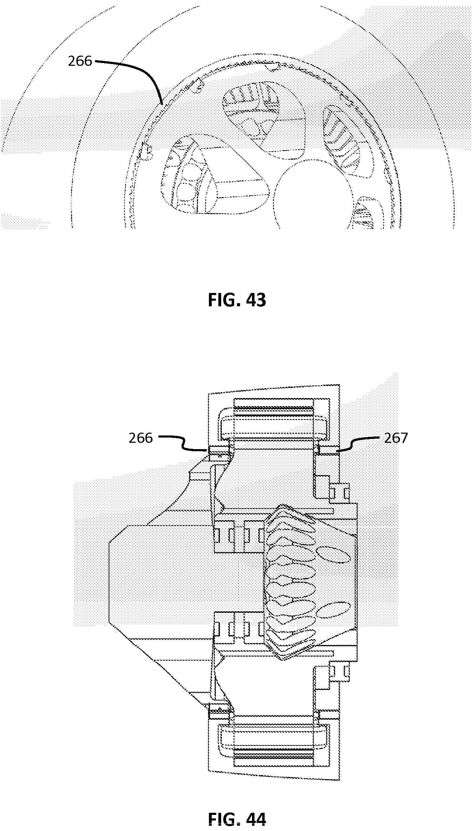

Figures 41-44 illustrate a motor 265 with directional clutches 266, 267 adapted to power a first set of blades when the motor is rotated in a first direction, and to power a second set of blades when the motor is rotated in a second direction. In some aspects, the VTOL blade set and the forward flight blade set may be oriented in different directions such that they both provide thrust in the same direction, although one set is engaged when the motor rotates in a first direction, and the second set is engaged when the motor rotates in a second direction.

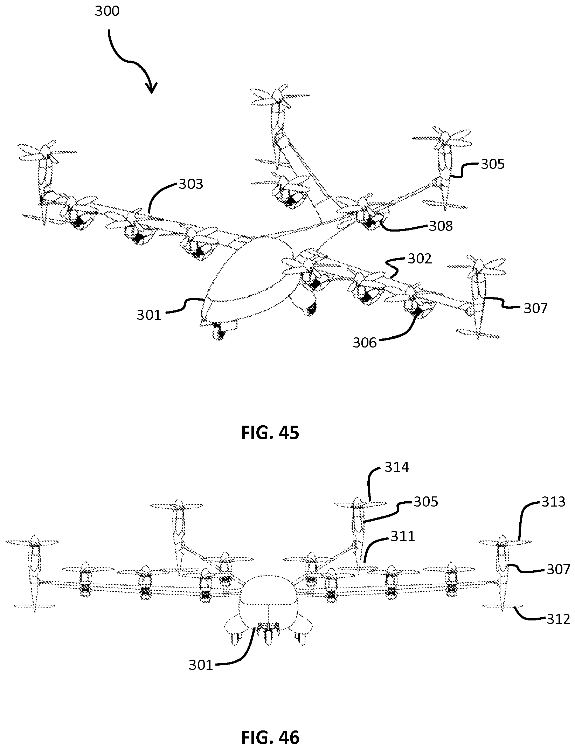

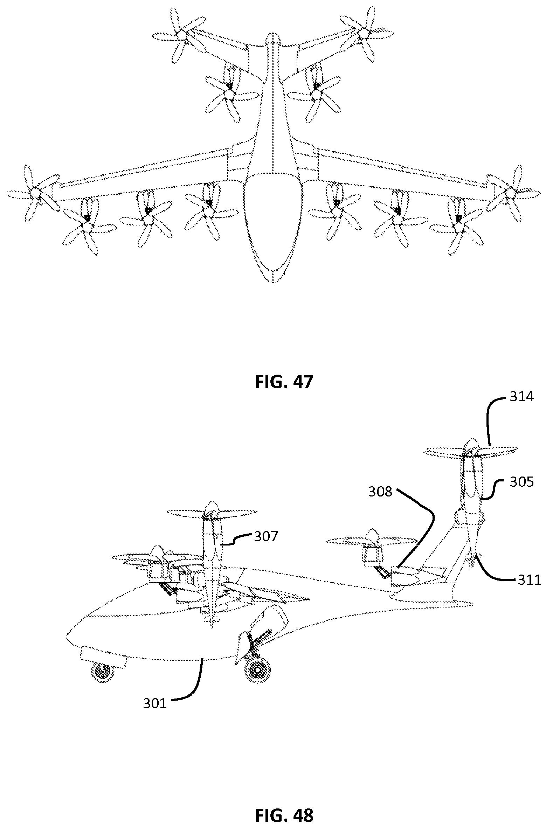

In an embodiment of the present invention, as seen in a vertical takeoff configuration in Figures 45-48, an aerial vehicle 300 uses forward swept wings 302, 303 with rotors of different types adapted for both vertical take-off and landing and for forward flight. The aircraft body 301 supports a left wing 302 and a right wing 303. Motor driven rotor assemblies 306, 307 on the wings include propellers which may stow and nest into the nacelle body. The aircraft body 301 extends rearward and is also attached to raised rear stabilizers 304. The rear stabilizers have rear rotor assemblies 305, 308 attached thereto. The aerial vehicle 300 is adapted for two passenger seats side by side, as well as landing gear under the body 301.

The wing mounted rotor units 306, 307 are adapted to provide vertical thrust during take-off and landing modes. The inner rotor units 306 are adapted to deploy to a VTOL configuration using linkages as seen in Figure 38. The blades of the inner wing rotor units 306 are adapted to stow when in a forward flight configuration, with the blades nested into recesses in the nacelle. The wing tip rotor units 307 are adapted to rotate relative to the wing such that the nacelle maintains its shape whether in a VTOL or a forward flight configuration. The VTOL blades 313 are used for VTOL and transition modes, and the forward flight blades 312 are used for forward flight, with the VTOL blades stowed and nested. The nacelle that maintains its shape allows for the use of a single motor to power either of the blade sets. The motor may use directional clutches such that the motor direction determines which of the blade sets is powered.

Similarly, the blades of the inner tail rotor units 308 are adapted to stow when in a forward flight configuration, with the blades nested into recesses in the nacelle. The rear tip rotor units 305 are adapted to rotate relative to the wing such that the nacelle maintains its shape whether in a VTOL or a forward flight configuration. The VTOL blades 314 are used for VTOL and transition modes, and the forward flight blades 311 are used for forward flight, with the VTOL blades stowed and nested.

In an exemplary configuration of this embodiment, the aerial vehicle has 12 rotors and weighs 900 kg. The rotor diameter is 1.1 meters, with a thrust per rotor of 736 N. The continuous rpm of the motor at sea level is 1850 rpm, with a maximum of 2270 rpm. The wingspan is 8.9 meters. The battery mass is 320 kg, and the mass per motor is 9 kg. The cruise speed is 320 km/h. The continuous hover power per motor is 19 shaft kW.

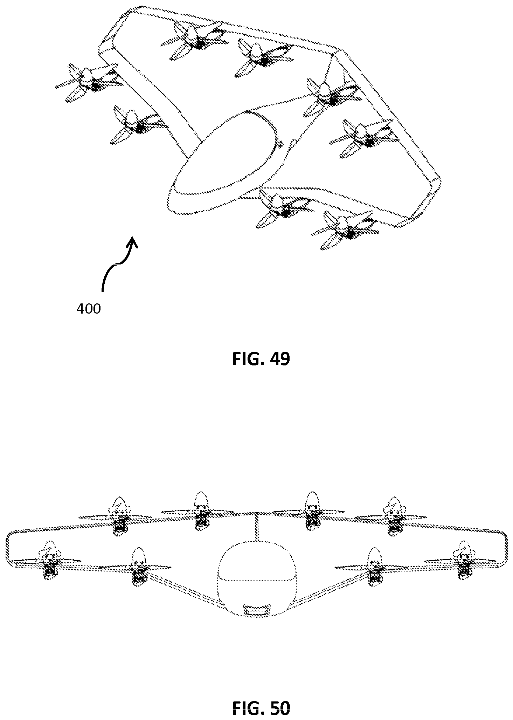

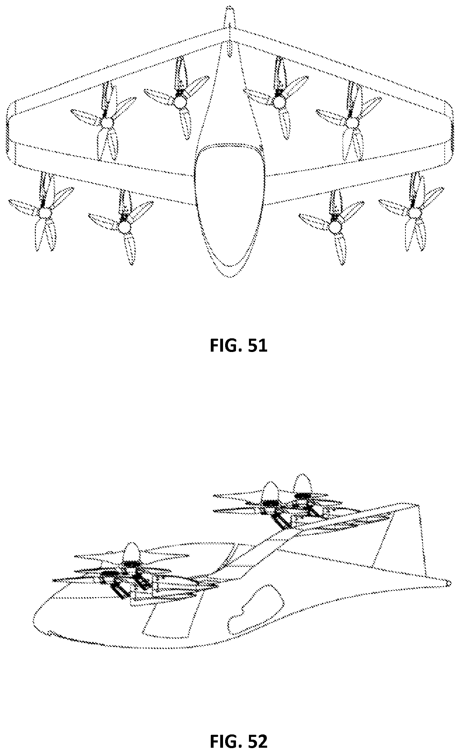

Figures 49-52 illustrate an exemplary vehicle 400 in a take-off configuration. A box wing design is seen with the rotor assemblies deployed into vertical take-off configuration.

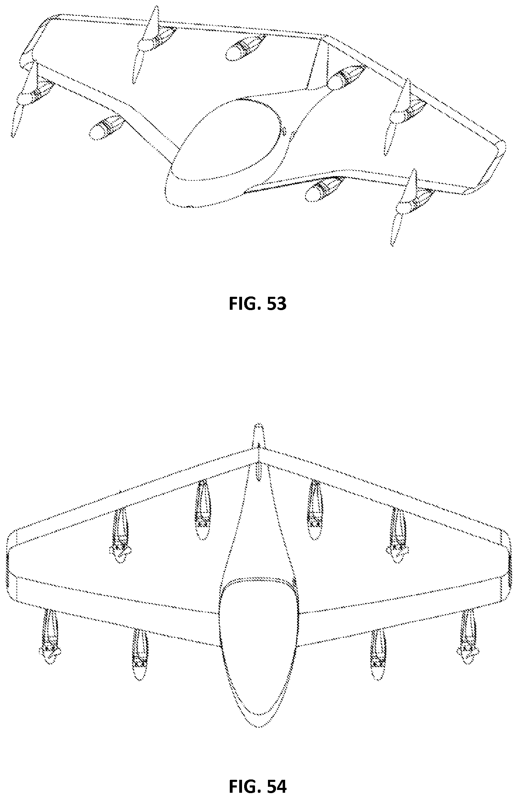

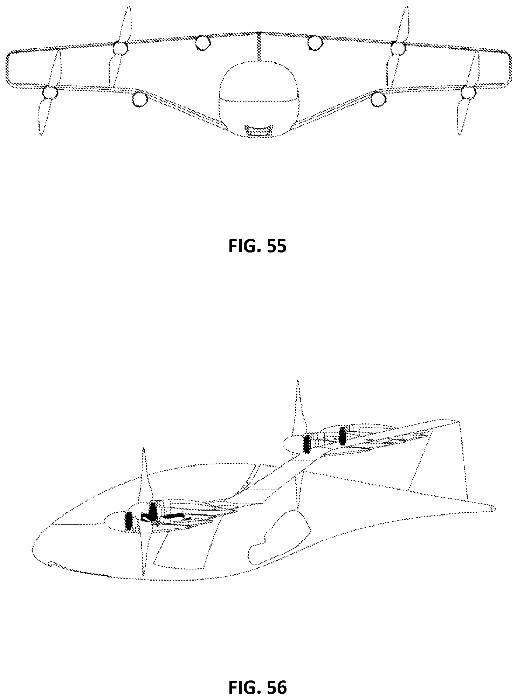

Figures 53-56 illustrate an aerial vehicle 400 in a forward flight configuration. As seen the rotor assemblies are rotated into a forward flight configuration. Some of the blades of the rotor assemblies have been stowed to reduce drag in this forward flight mode.

The vehicles according to embodiments of the present invention take-off from the ground with vertical thrust from rotor assemblies that have deployed into a vertical configuration. As the aerial vehicle begins to gain altitude, the rotor assemblies may begin to be tilted forward in order to begin forward acceleration. As the aerial vehicle gains forward speed, airflow over the wings results in lift, such that the rotors become unnecessary for maintaining altitude using vertical thrust. Once the aerial vehicle has reached sufficient forward speed, some or all of the blades used for providing vertical thrust during take-off may be stowed along their nacelles. The nacelle supporting the rotor assemblies may have recesses such that the blades may nest into the recesses, greatly reducing the drag of the disengaged rotor assemblies.

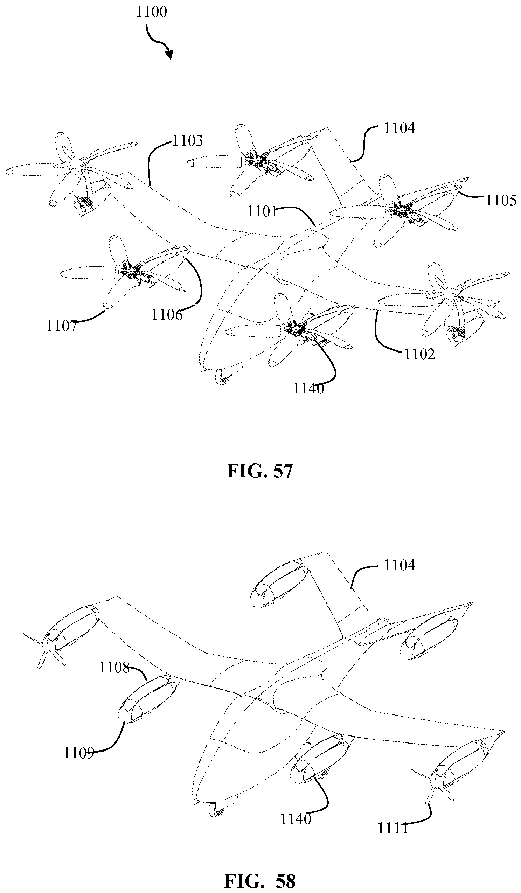

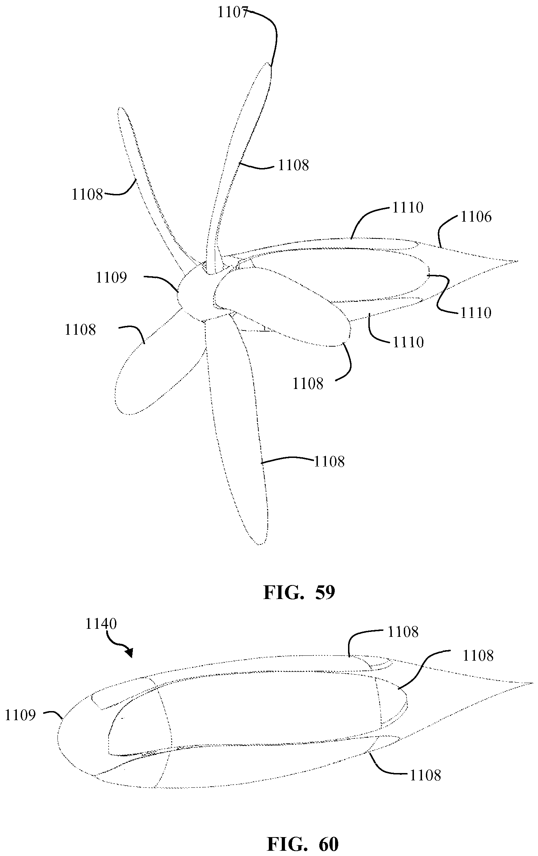

Figure 57 illustrates the aerial vehicle 1100 in a vertical take-off and landing configuration such that the thrust of the rotors is directed upward. The propellers 1107 have been rotated relative to the nacelle bodies 1106 using articulated linkages. In this vertical take-off and landing configuration, the aerial vehicle 1100 is able to utilize six propellers providing thrust in a vertical direction. The propellers 1107 are adapted to raise the vehicle 1100. After the initial vertical take-off, the vehicle transitions to forward horizontal flight. The transition is facilitated by the articulation of the propellers from a vertical thrust configuration to positions off of vertical, transitioning to a horizontal thrust configuration. Figure 59 is illustrative of the motor driven rotor unit in a powered forward flight configuration.

As the aerial vehicle 1100 transitions to a forward, horizontal, flight configuration, the wings 1102, 1103 begin to provide lift. Once traveling in a horizontal attitude, with speed, significantly less thrust is needed to propel the aerial vehicle 1100 forward than was needed as vertical thrust during take-off. Figure 58 illustrates a forward flight configuration of an aerial vehicle 1100 wherein the blades 108 of the propellers 107 have been stowed into recesses 1110 on the nacelle bodies 1106. With the blades stowed during forward flight, a low drag profile may be attained. In some aspects, some of the main propellers 1 107 may be used for forward flight. In some aspects, all of the main propellers 1107 may be stowed, and alternate forward flight propellers 1111 may be used in forward flight.

In an exemplary configuration, the aerial vehicle has 6 rotors and weighs 900 kg. The rotor diameters are 2.1 meters, with a thrust per rotor of 1500 N in hover. The continuous rpm of the motor at sea level is 1030 rpm, with a maximum of 1500 rpm. The wingspan is 7.5 meters. The battery mass is 360 kg, and the mass per motor is 9 kg. The cruise speed is 320 km/h. The continuous hover shaft power per motor is 25 kW at standard sea level conditions.

Figures 59 and 60 illustrate the deployed and stowed configurations, respectively, of the main propellers 1107 of the motor driven rotor units 1140. In the deployed configuration, the propeller blades 108 of the propeller 1107 are deployed to a position approximately perpendicular to the rotation axis of the motor driven rotor unit 1140. The actual blade angle may vary as a function of motor rpm and other factors, as discussed below. A spinner 1109 presents a leading surface for the motor driven rotor unit 1140.

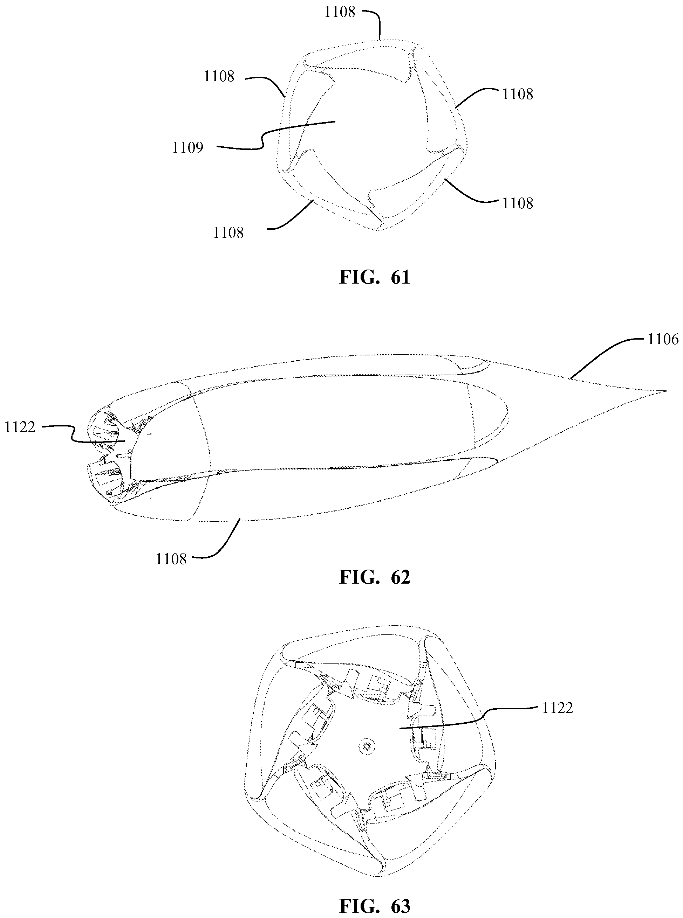

In the stowed configuration, the blades 1108 reside within recesses 1110 in the nacelle body 1106. As seen in front view in Figure 61, in the stowed configuration the outer surface of the forward portion of the nacelle is composed of the surfaces of the blades 1108 of the propeller 1107. The outer surface of the nacelle with the blades in the stowed configuration is a composite of the five blades' surfaces. The blades and the nacelles may be designed in concert such that the nacelle aerodynamic requirements and those of the propeller fit into each other into a complementary design. The recesses 1110 may be adapted to provide a very snug fit for the blades 1108 in the stowed configuration.

Figures 62 and 63 illustrate a perspective view and a front view, respectively, of a motor driven rotor unit with the spinner removed to help the viewer visualize a design according to some aspects of the present invention. The main hub 1122 is seen as a mounting point for each of the five propeller blades 1108. The main hub 1122 provides the main support of the propeller blades, which are each pivotally connected to the main hub. The main hub 1122 also provides the drive torque to the blades 1108 of the propeller 1107. As discussed further below, the main hub 1122 is coupled to the outboard bracket of the rotor deployment mechanism via a rotary bearing, or bearing assembly.

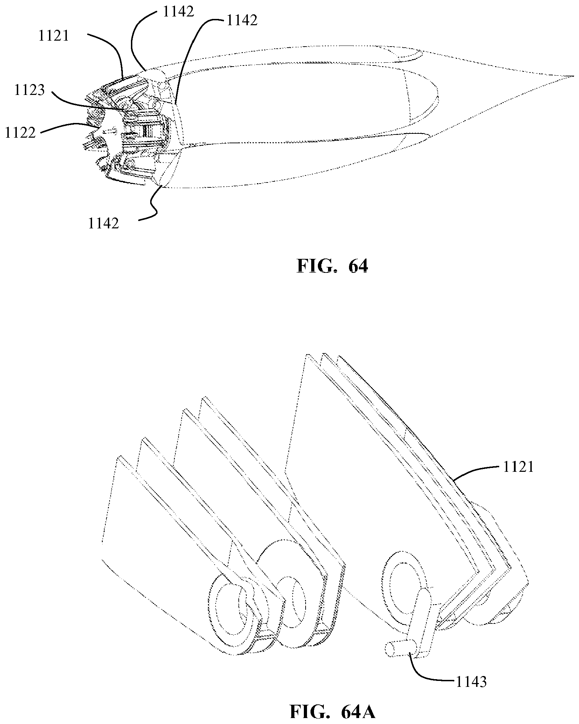

Figure 64 illustrates a perspective view of a motor driven rotor unit with further portions removed for clarity of illustration. The propeller blade 1108 is illustrated solely as a partial blade 1142, allowing for observation of the fin mount 1121. The fin mount 1121 is bonded within the (missing in this view) inner portion of the propeller blade. In some aspects, the propeller blade is formed from a number of pre-formed pieces which are then bonded together, with the fin mount affixed therein. The fin mount 1121 may be metal, and constructed such that it is adapted to allow for mounting to the main hub 1122 with a hinge pin 1123, for example. In some embodiments, as seen in Figure 64A, the fin mount 1121 may be a plurality of independent pieces. These pieces may be fixtured during assembly of the propeller blade 1108 such that the finished component is adapted to mount to the main hub 1122 with a hinge pin. A stowing tab 1143 may be affixed to the fin mount 1121 to allow for moving the blade into a stowed configuration into the recess and against the nacelle body. In some aspects, the propeller blade 1108 may be of a composite material. The propeller blade 1108 may be assembled from pieces such that the blade is a hollow shell assembled from premanufactured individual pieces. A deploy spring 1141 allows for the blades of the propeller to achieve a deployed configuration in the absence of centrifugal forces. The deploy spring allows for full deployment of the propeller blades even when the rotors are not turning. To achieve full stowage, the stowing tabs 1143 on the propeller blades 1108 of the propeller 1107 are pushed on by a stowing mechanism, until the blades are fit within the recesses 1110 of the nacelle bodies.

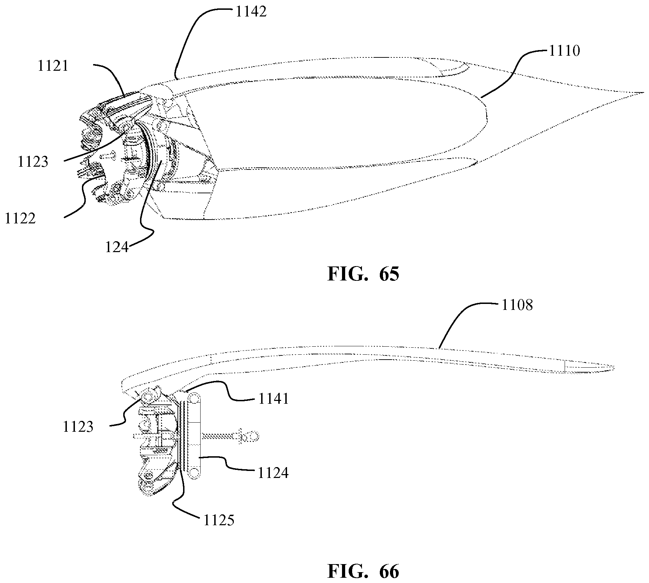

Figure 65 illustrates another perspective view of a motor driven rotor unit with even further portions removed for clarity of illustration. The main hub 1122 is seen supporting the fin mount 1121. The fin mount 1121 is adapted to pivot relative to the main hub 1122 using a hinge pin 1123. In some recesses, the partial blades 1142 are seen, and other recesses 1110 no blade is seen, for purpose of visual clarity only. As the further portions have been removed for illustrative effect, the rotor deployment mechanism, the motor, and other components come into view.

Figure 66 illustrates a side view of portions of a rotor according to some embodiments of the present invention. The propeller blade 1108 is seen in a stowed position. The propeller blade 1108 is hinged with a hinge pin 1123 to the main hub 1122. The main hub is seen mounted within a bearing assembly 125. The bearing assembly 1125 is mounted to the outboard bracket 1124 of the rotor deployment mechanism. In some aspects, the main hub 1122 is mounted to the inner race or races of the bearing assembly 1125, and the outer race of the bearing assembly 1125 is mounted within the outboard bracket 1124 of the rotor deployment mechanism.

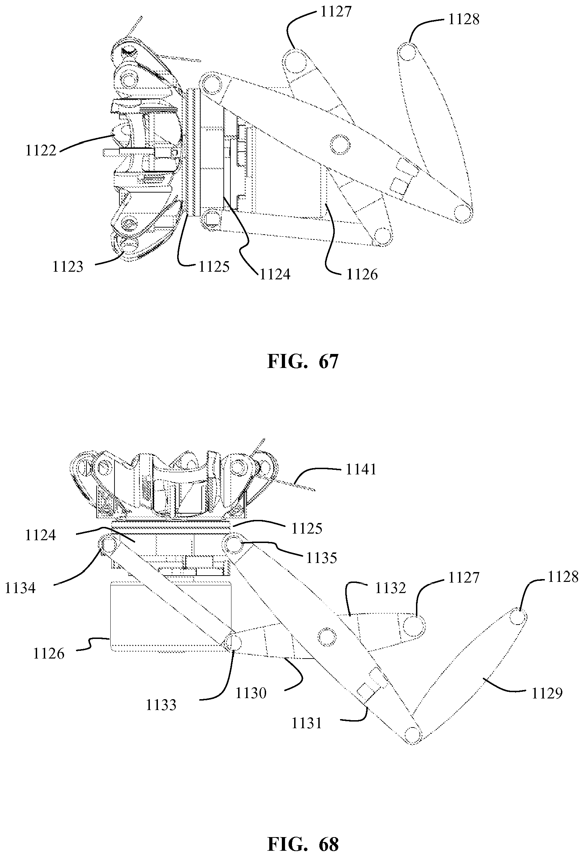

Figure 67 is a side view of portions of a rotor deployment mechanism of a deployable motor driven rotor assembly in a forward flight configuration according to some embodiments of the present invention. The main mounting points 1127, 1128 are the structural attachment points for the rotor deployment mechanism 1143, and by extension, for the motor driven rotor unit, to the aerial vehicle. The drive motor 1126 is adapted to drive the rotor main hub 1122, and by extension, the propeller of the rotor unit. In this forward flight configuration, the rotor thrust vector is oriented forward with regard to the aerial vehicle, and is horizontal.

Figure 68 illustrates rotor deployment mechanism 1143 in a deployed, vertical take-off, configuration. The rotor deployment mechanism has both rotated and displaced the rotor. The deployment has pushed the rotor hub forward, and away, from the main mounting points 1127, 1128, as well as upward vertically relative to the main mounting points. In this vertical take-off configuration, the rotor axis is vertical. In some aspects, with the use of rotor deployment mechanisms as described herein, the nacelle may be seen as being split during the rotor deployment such that the rear portion of the nacelle stays with the wing in a fixed positional relationship. The rotor deployment may then be able to occur from a nacelle along the wing, or along a rear horizontal stabilizer element. The rotor deployment mechanisms may be mounted at a position that is not the end of the wing, or other horizontal element.

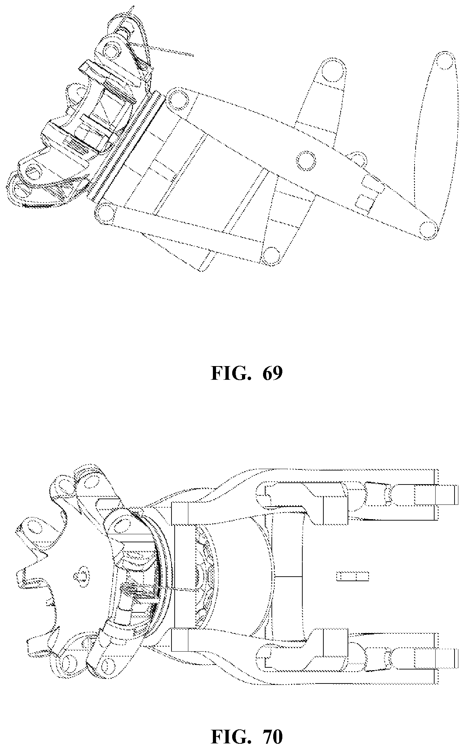

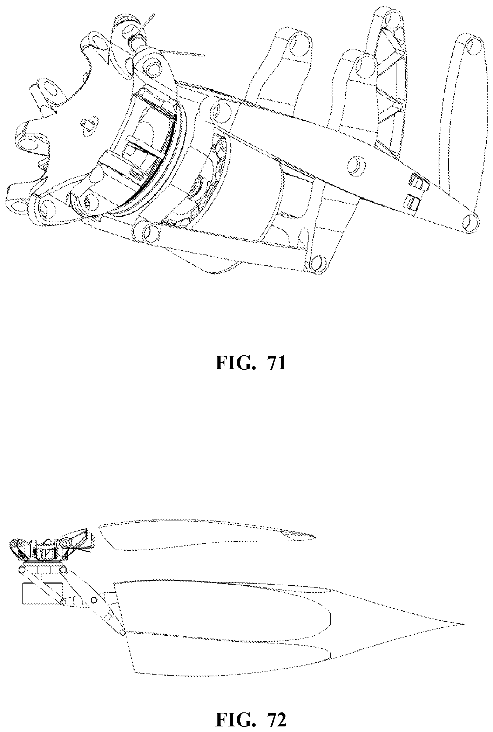

The outboard bracket 1124 is attached to the deployment linkages at the bracket attach points 1134, 1135. The bracket arms 1129, 1130, 1131 link via pivot points 1132, 1133. With the use of multi-arm linkages the rotor may be moved to preferred positions in both the deployed and stowed configurations. Figures 69-72 illustrate the rotor with its linkages in a partially deployed configuration, which is seen during transitions from vertical to horizontal thrusting, or from horizontal to vertical thrusting.

The electric motor/propeller combination being on the outboard side of the articulating joint allows for a rigid mounting of the propeller to the motor, which is maintained even as the propeller is moved through various attitudes relative to the rear nacelle portion. With such a configuration the rotating power from the motor need not be gimbaled or otherwise transferred across a rotating joint.

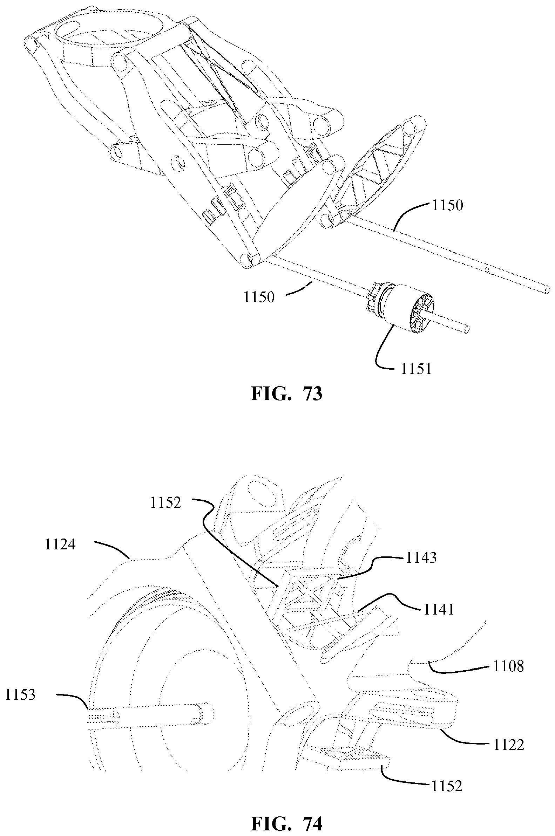

Figure 73 illustrates a deployment drive system for a deployment mechanism according to some embodiments of the present invention. A drive unit 1151 may be coupled to the aerial vehicle, within the wing in an area adjacent to the mounting points for the main mounting points 1127, 1128. Drive screws 1150 may be driven such that the deployment linkage is driven from a stowed configuration to a deployed configuration, and from a deployed configuration to a stowed configuration.

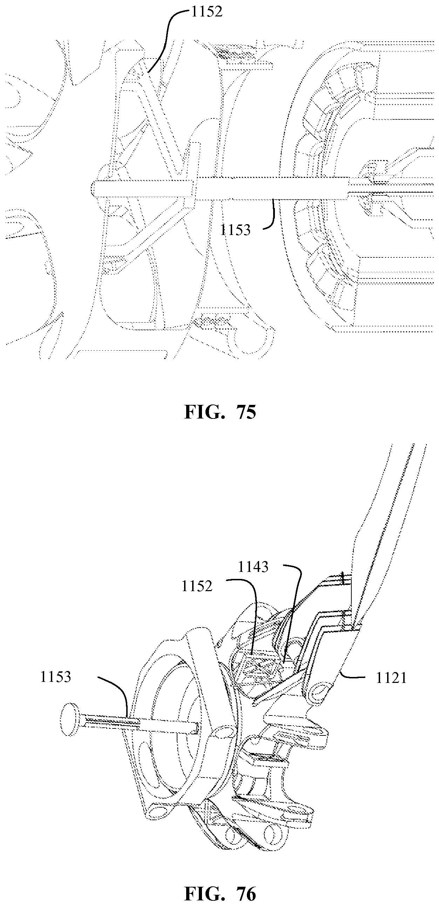

Figure 74 is a partial view of the underside of a main rotor hub 1122 mounted into an outboard bracket 1124 of a rotor deployment mechanism according to some embodiments of the present invention. A stowing rod 1153 is adapted to drive the stowing levers 1152 against the stowing tabs 1143. The stowing tabs 1143 then drive the propeller blades into a nested position onto the nacelle body. The deploy springs 1141 are adapted to deploy the propeller blades 108 from a stowed position to a deployed position. Figure 75 is a partial side cutaway view of the stowing rod 1153 coupled to a plurality of stowing levers 1152. The stowing rod 1153 may be driven by a linear actuator to engage the stowing tabs 1143 in order to deploy the propeller blades from their stowed, nested, configuration. When fully deployed, the propeller blades will not reside on the stowing levers. Figure 76 is a bottom perspective view of the stowing rod 1153 and its coupling to the stowing levers 1152, and ultimately to the fin mounts 1121 of the propeller blades 1108. Position indicators may be used to properly line up the propeller relative to the recesses in the nacelle.

In an exemplary embodiment of a method for flying an aerial vehicle with an articulated electric propulsion system and fully stowing blades, an aerial vehicle may be on the ground. The aerial vehicle may have a plurality of wing and tail mounted motor driven rotor units. The motor driven rotor units may begin with propeller blades that are stowed such that the stowed propeller blades comprise all or most of the effective wetted area of portions of the nacelles of which they form a part. The nacelles may have recesses adapted to receive the stowed blades.

The stowed blades may be held in the stowed position with the assistance of stowing mechanisms. In preparation for vertical take-off, the stowed blades may deploy to a deployed configuration. The blades may utilize deployment springs which assist with the deployment of the blades upon the release of stowing levers. The stowing levers may be adapted to pivot the propeller blades from a deployed to a stowed configuration.

Once the propeller blades are in a deployed position, the entire motor driven rotor assembly may be itself deployed from a forward flight position to a vertical take-off and landing position with the use of an articulating rotor deployment mechanism. The deployment mechanism is adapted to position the propellers in front of and above the wings, or otherwise clear of other aerial vehicle structure. With the propeller blades now deployed, and with the motor driven rotor units now articulated into a vertical take-off configuration, the aerial vehicle is able to begin a vertical take-off. The rotors are spun up and the vehicle rises from the ground.

After take-off, the aerial vehicle will begin a transition to forward flight by articulating the rotors from a vertical thrust orientation to a position which includes a horizontal thrust element. As the aerial vehicle begins to move forward with speed, lift will be generated by the wings, thus requiring less vertical thrust form the rotors. As the rotors are articulated further towards the forward flight, horizontal thrust, configuration, the aerial vehicle gains more speed.

Once the aerial vehicle is engaged in regular forward flight, the propellers in use during take-off may no longer be necessary. The thrust requirement for forward flight may be significantly less than that required during vertical take-off and landing. The forward flight may be maintained by just a subset of the propellers used for take-off, or by different propellers than those used during takeoff. The unused propellers may have their propeller blades stowed in to recesses on the nacelles supporting the propellers. The stowed propeller blades may form the exterior surface of portions of the nacelle.

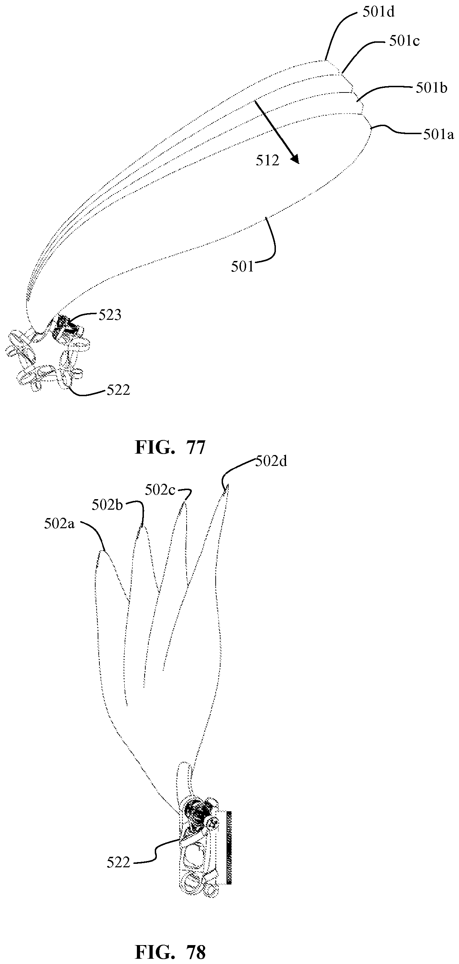

In some embodiments of the present invention, as seen in Figures 77 and 78, propeller blades 501 may be attached to a central hub 522 such that as the blade pivots from a forward, deployed, position towards a stowed position the blade counter-rotates relative to its normal rotation direction 512. Using the multiple views shown in Figures 77 and 78 to illustrate the geometry, the views illustrate the same relative blade positions. In a first position 501a, 502a, the blade is coned forward relative to the central hub 522. With this most forward coned position 502a as seen in Figure 78, the blade is also rotationally at a most forward position 501a, as seen in Figure 77. As the blade moves backwards slightly 502b relative to the most forward position 501a, the blade also retards angularly relative to the central hub to a slightly retarded position 501b.

As the blade moves further backwards, relative to the forward coned position, through more positions 502c, 502d, the blade is simultaneously moving back through a series of angularly retarded positions 501c, 501d.

Among the advantages of this system is that should a blade be struck by an object, such as a bird, during flight, the system acts in a coupled fashion to lower the impact forces. As the strike hits the blade from the front, the blade is pushed back. The inertia of the impacting object, through its inertia, imparts a force on the blade in an angular direction counter to its undisturbed helical direction of motion. Through the coupling of the system, as the impact causes the blade to pivot backwards relative to a more forward coned position, the coupling retards the blade along its spin direction in such a way that it moves roughly in the direction of the motion of the impacting object, thus moderating the impact upon the blade. Not only is the strain reduced, but the impact shock loading will also be reduced.

The coning angle is achieved as a result of the balance between the aerodynamic and inertial moments generated by the blades. By angling the blade pivot axis relative to a plane normal to the propeller rotational axis, the blade may be made to retard relative to the rotational axis as it is pushed backwards with regard to cone angle. The pivot assembly 523 may have two bores 524, 525. The axis of a first bore 524 closest to the blade 501 may be pushed forward along the spin axis relative to the axis of a second bore 525. This staggering of the bores 524, 525 along a direction parallel to the rotational axis of the propeller and its central hub 522 will allow for the angular retardation of the blade as the blade is pushed backwards from a forward coning angle. When the blade pivot axis is angled as discussed above, the coupled system allows an impacted blade to both slow down and flap backward during the impact, dramatically reducing the impact loads on the blade, the hub, and the support structure.

In some embodiments, in order to help achieve a well nested set of stowed blades which also have good figure of merit, the blades 501 may have some or significant forward sweep. Also, the pivot assembly 523 may be canted in another angle in order to better the nested fit of the set of propeller blades. Figures 24, 25, and 26 illustrate front, side, and perspective views, respectively, of a propeller 508 with its blades 501 in a stowed configuration. The outer surfaces of the stowed blades 501 form almost a continuous surface. When stowed over an exterior surface of a nacelle with mating recesses, a very low drag stowed system can be maintained.

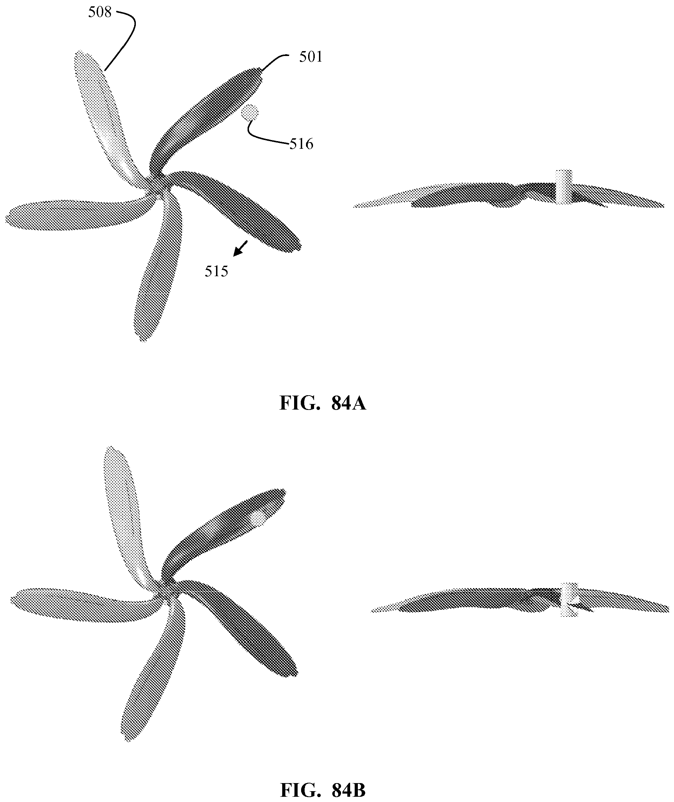

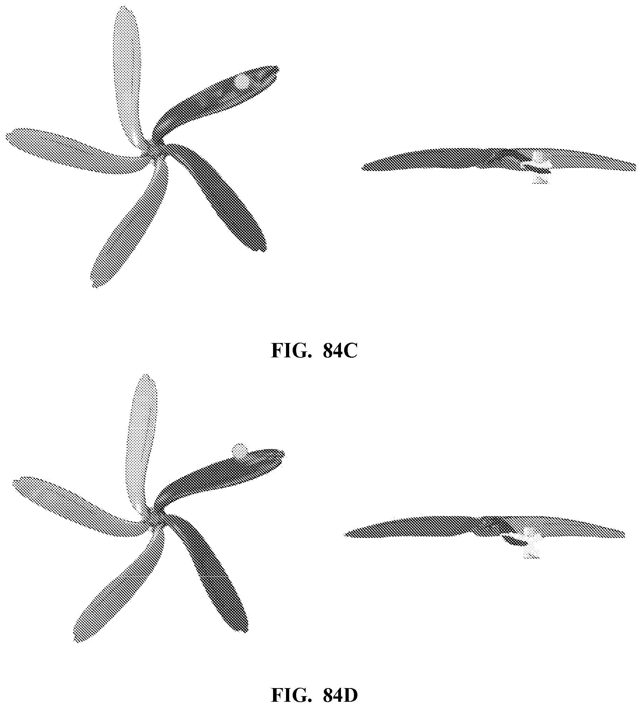

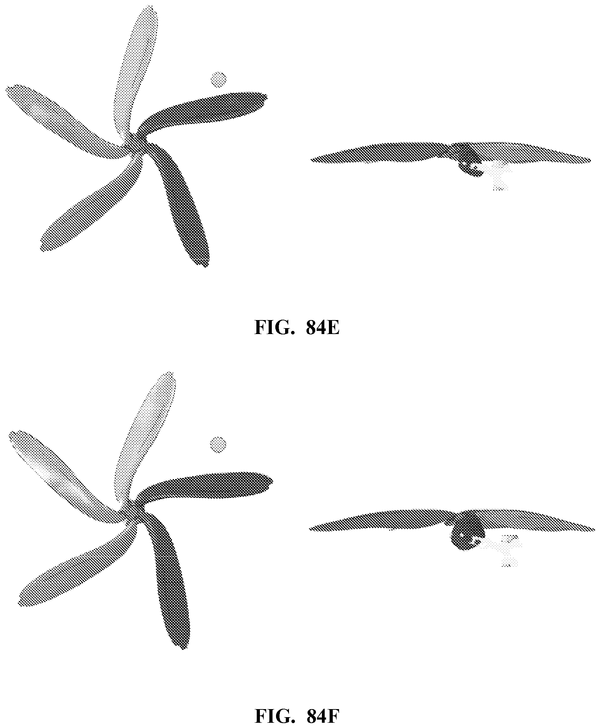

Figures 84A-F illustrate a series of freeze frames of a rotating propeller 508 being struck by a mass 516. The views illustrate the coupling, as both front and side views are shown from the same moment in time, as the impact affects the system. In these Figures, the propeller is spinning in a clockwise direction 515, with a very forward swept propeller blade. By the later timing in the timed sequence of Figure 84D, the rotational retardation of the impacted blade can be seen. Also, the downward deflection of the blade can be seen in the side view. By the timed sequence of Figure 84E, the rotational retardation of the impacted blade can be more clearly seen. Also, the downward deflection of the blade can be more clearly seen in the side view. This sequence illustrates a distinct advantage of this coupled system.

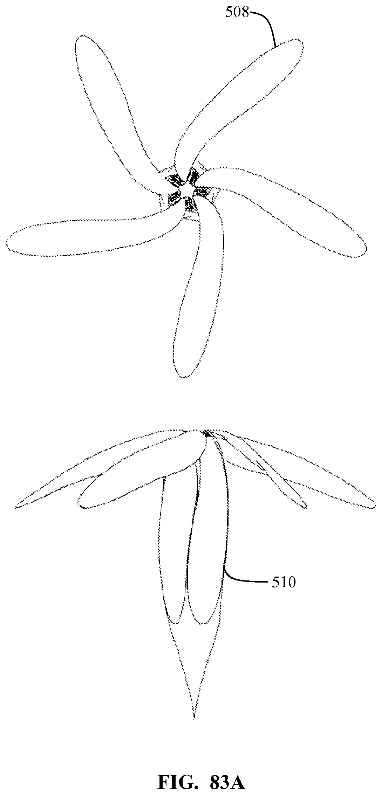

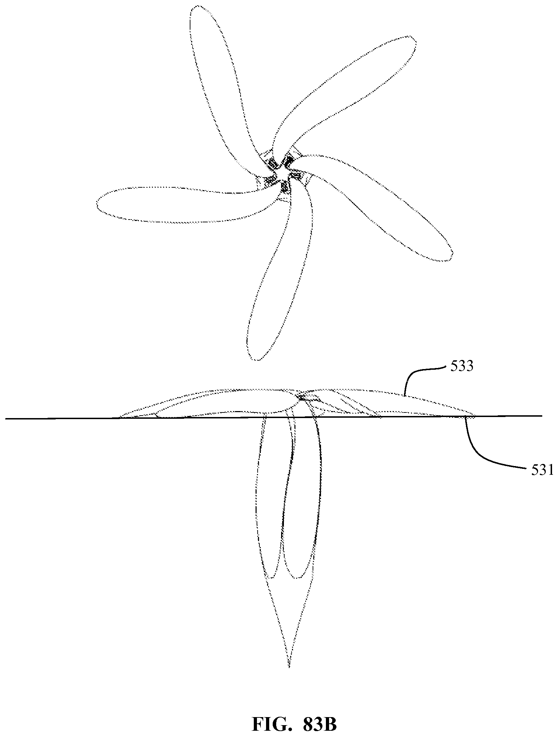

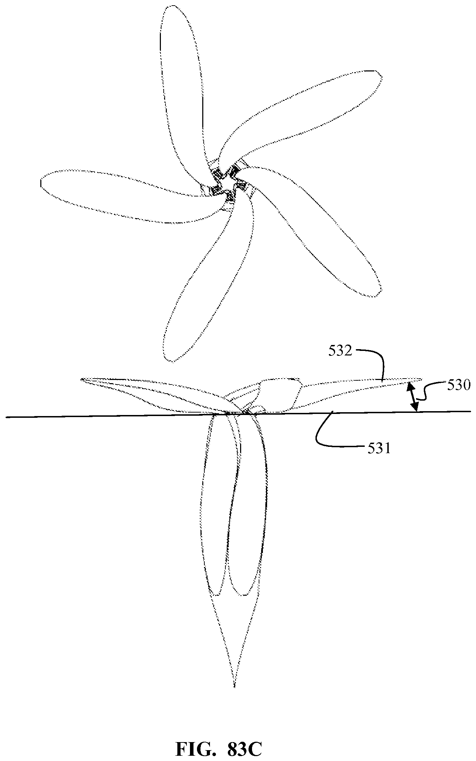

Figures 83A-C illustrate top and side views of motor driven rotor assembly according to some embodiments of the present invention. Figure 83A illustrates a motor driven rotor assembly wherein the propeller is coned backwards somewhat. Figure 83B illustrates a configuration wherein the propeller blades are substantially perpendicular to the rotational axis. Figure 83C illustrates a configuration wherein the propeller blades are coned forward.

As mentioned above, the coning angle is achieved as a result of the balance between the aerodynamic and inertial moments on that propeller blade about its hinge axis. Figure 83C is illustrative of a coning angle which may be seen during normal flight, whether forward flight or vertical take-off and landing. The blades 532 cone up at an angle 530 relative to a plane 531 normal to the spin axis of the propeller. Should there be an increase in the rotational speed of the propeller blade, such as may be desired or required during flight, or during takeoff/landing, the resultant increased centrifugal force on the blades, will flatten the blades relative to the initial forward coning angle 530. The resulting position may be as seen if Figure 83B. The blades 533 are now seen in plane with the normal 531 to the spin axis, although any angle that is closer to normal than the initial forward coning angle 530 may result, depending upon flight parameters and circumstances.

In some embodiments, with the angling of the blade pivot axis as discussed above, the blade pitch will increase as the blade pivots from a more forward coning angle to a flatter coning angle. This change in pitch results as a function of system geometry with the angled pivot pin system.

With the use of electric motors as part of the motor driven rotor assemblies, this system will have an advantage in that very quick responses in thrust are achievable. The electric motors are able to deliver changes in torque very quickly relative to internal combustion engines, or jet engines, for example. An application of increased torque to the propeller hub will result in an initial lag motion of the blades due to their inertia, and this lag motion will result in a change of pitch of the blades. Thus, while the motor is accelerating the pitch of the blades increases. This system, which uses quick to respond electric motors, and also uses a propeller blade system which increases pitch angle with a lag motion of the propeller blades, allows for previously unseen responsiveness in a flight system.

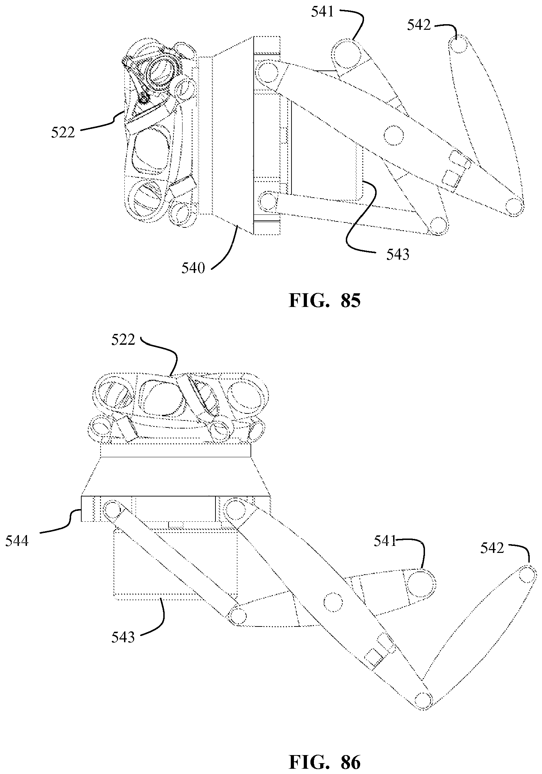

Figure 85 is a side view of portions of a rotor deployment mechanism of a deployable motor driven rotor assembly in a forward flight configuration according to some embodiments of the present invention. The main mounting points 541, 542 are the structural attachment points for the rotor deployment mechanism 540, and by extension, for the motor driven rotor unit, to the aerial vehicle. The drive motor 543 is adapted to drive the rotor main hub 522, and by extension, the propeller of the rotor unit. In this forward flight configuration, the rotor thrust vector is oriented forward with regard to the aerial vehicle, and is horizontal.

Figure 86 illustrates rotor deployment mechanism 540 in a deployed, vertical take-off, configuration. The rotor deployment mechanism has both rotated and displaced the rotor. The deployment has pushed the rotor hub 522 forward, and away, from the main mounting points 541, 542, as well as upward vertically relative to the main mounting points. In this vertical take-off configuration, the rotor axis is vertical. In some aspects, with the use of rotor deployment mechanisms as described herein, the nacelle may be seen as being split during the rotor deployment such that the rear portion of the nacelle stays with the wing in a fixed positional relationship. The rotor deployment may then be able to occur from a nacelle along the wing, or along a rear horizontal stabilizer element. The rotor deployment mechanisms may be mounted at a position that is not the end of the wing, or other horizontal element.

The outboard bracket 544 is attached to the deployment linkages at the bracket attach points 134, 135. The bracket arms link via pivot points. With the use of multi-arm linkages the propeller may be moved to preferred positions in both the deployed and stowed configurations.

The electric motor/propeller combination being on the outboard side of the articulating joint allows for a rigid mounting of the propeller to the motor, which is maintained even as the propeller is moved through various attitudes relative to the rear nacelle portion. With such a configuration the rotating power from the motor need not be gimbaled or otherwise transferred across a rotating j oint. The deployment is of the entire motor driven rotor in some aspects.

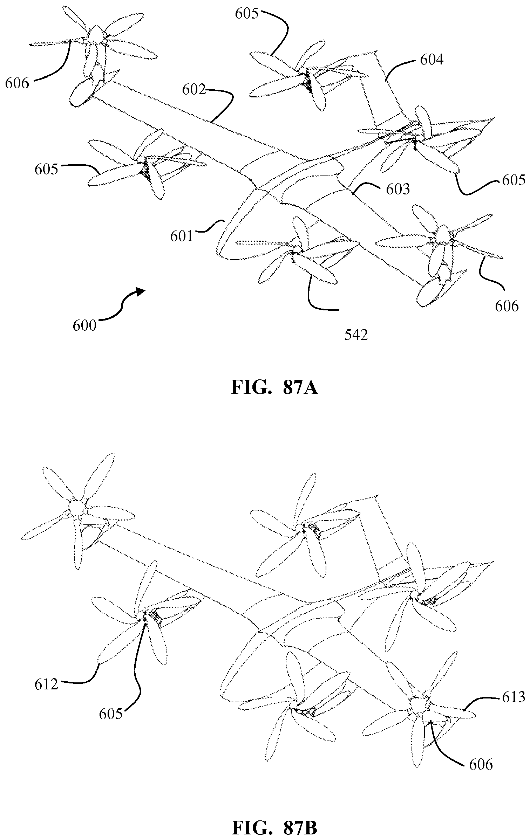

Figures 87A-D illustrate an aerial vehicle 600 during take-off and through transition to forward flight according to some embodiments of the present invention. In this illustrative embodiment, the aerial vehicle 600 has a body 601, wings 602, 603, and a tail structure 604. The motor driven rotor assemblies 605 along the midspan of the wing, and attached to the tail structure, have articulating mechanisms adapted to deploy the rotor assemblies. This allows for vertical thrust for take-off and landing, as seen in Figure 87A. The wing tip rotor assemblies 606 are adapted to pivot to a vertical thrust orientation as well.

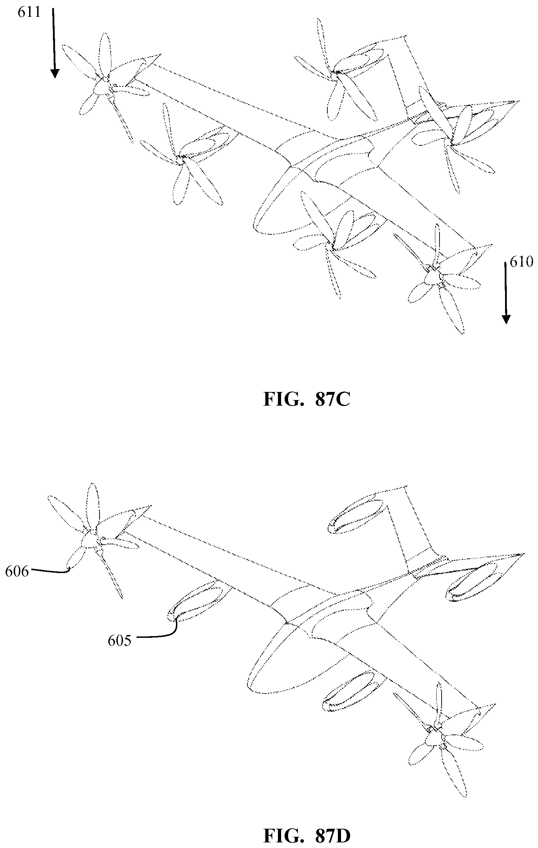

After take-off, the rotor assemblies 605, 606 are adapted to transition towards a forward flight configuration, with the thrust moving from a vertical orientation towards a horizontal orientation, via motion of the rotor assemblies, as seen in Figure 87B. At transition to forward flight, as seen in Figure 87C, the rotor assemblies 605, 606 have fully transitioned to a horizontal thrust position.

With the lift provided by the wings 602, 603, supporting the aerial vehicle 600, less thrust is needed to keep the vehicle flying horizontally. In order to save power and to reduce drag, the blades 605 of the mid span mounted and rear stabilizer mounted rotor assemblies 605 may have their blades nested against the nacelles. The reduced drag forward flight configuration is illustrated in Figure 87D.

Nested blades according to some embodiments of the present invention provide a very large decrease in drag. For example, in an illustrative case, feathering blades on an unused motor driven propeller assembly would result in 128N of drag. Simple folding of the blades results in 105N of drag. Yet with nested blades the drag is reduced to 10N. This compares very favorably to a bare nacelle, with 7N of drag.

In some aspects, the blades of the mid span mounted and rear stabilizer mounted rotor assemblies 605 are pivotally attached to a rotor hub. The blades 612 of these rotor assemblies may be forward swept, and attached using an angled pin mechanism as described above. These blades may stow into recesses in the nacelles. The wing tip mounted rotor assemblies 606 may have blades 613 which are variable pitch blades. These blades may power the vehicle during forward flight.

The wing tip mounted blades 613 may rotate in a direction opposite the inner blades along the wing. In addition, the wing tip mounted propeller may rotate such that it counters the tip vortexes of the wings. The wing tip mounted rotor will rotate such that the blades are coming downward 610, 611 exterior to the wings. Thus, the left side wing tip propeller and the right side wing tip propeller will rotate in different directions.

## Claims

1. A method for operating an aerial vehicle (600) adapted for vertical take-off and horizontal flight, said method comprising the steps of:
pivoting a plurality of motor driven propeller units to a vertical thrust configuration;
providing power to said motor driven propeller units, thereby rotating the propellers of said motor driven propeller units;
taking off the aircraft from the ground, wherein said aircraft comprises:
a main vehicle body (601);
a right side wing (602), said right said wing (602) coupled to a right side of said main vehicle body (601), said right side wing (602) comprising a forward swept wing;
said motor driven propeller units comprising one or more right side rotor assemblies (605) comprising propellers and electric motors, wherein one or more right side wing rotor assemblies (605) are attached to said right side wing (602), and wherein said one or more right side wing rotor assemblies (605) protrude forward of the leading edge of said right side wing (602) along a middle section of the wing span, and
a left side wing (603), said left side wing (603) coupled to a left side of said main vehicle body (601), said left side wing (603) comprising a forward swept wing;
said motor driven propeller units further comprising one or more left side rotor assemblies (605) comprising propellers and electric motors, wherein one or more left side wing rotor assemblies (605) are attached to said left side wing (603), and wherein said one or more left side wing rotor assemblies (605) protrude forward of the leading edge of said left side wing (603) along a middle section of the wing span;
said motor driven propeller units further comprising:
a right side wing tip rotor unit (606), wherein said right side wingtip rotor unit (606) is attached to the outboard tip of said right side wing (602); and
a left side wing tip rotor unit (606), wherein said left side wingtip rotor unit (606) is attached to the outboard tip of said left side wing (603);
wherein said one or more right and left side rotor assemblies (605) comprising articulating mechanisms adapted to deploy the rotor assemblies from said vertical thrust take-off orientation to a horizontal thrust flight orientation; and
wherein said right side wing tip rotor unit (606) and said left side wing tip rotor unit (606) are adapted to pivot to said vertical and a horizontal thrust orientation;
transitioning the plurality of motor driven propeller units from said vertical thrust configuration towards said horizontal configuration, thereby gaining horizontal speed for the aircraft; and
flying the aircraft in a forward flight configuration.

2. The method of claim 1 further comprising the step of discontinuing the provision of power to some or all of the plurality of motor driven propeller units.

3. The method of claim 2 further comprising the step of stowing the propeller blades (612, 613) of some or all of the propellers of the motor driven propeller units while flying the aircraft (600) in a forward flight configuration.

4. The method of claim 3 wherein the step of stowing the propeller blades (612, 613) of some or all of the propellers comprises stowing the propeller blades (612, 613) into recesses on the exterior surfaces of the nacelles of the motor driven propeller units.

5. The method of claim 3 further comprising the step of re-deploying the stowed propeller blades (612, 613) in preparation for vertical landing.

6. The method of claim 5 further comprising providing power to the previously stowed propellers.

7. The method of claim 6 further comprising the step of transitioning the plurality of motor driven propeller units from a horizontal configuration towards a vertical thrust configuration, thereby reducing horizontal speed of the aircraft (600).

8. The method of claim 7 further comprising the step of vertically landing the aircraft (600).

9. An aerial vehicle (600) adapted for vertical take-off and horizontal flight, said aerial vehicle comprising:
a main vehicle body (601);
a right side wing (602), said right said wing (602) coupled to a right side of said main vehicle body (601), said right side wing (602) comprising a forward swept wing;
a left side wing (603), said left side wing (603) coupled to a left side of said main vehicle body (601), said left side wing (603) comprising a forward swept wing;
one or more right side rotor assemblies (605) comprising propellers and electric motors, wherein one or more right side wing rotor assemblies (605) are attached to said right side wing (602), and wherein said one or more right side wing rotor assemblies (605) protrude forward of the leading edge of said right side wing (602) along a middle section of the wing span; and
one or more left side rotor assemblies (605) comprising propellers and electric motors, wherein one or more left side wing rotor assemblies (605) are attached to said left side wing (603), and wherein said one or more left side wing rotor assemblies (605) protrude forward of the leading edge of said left side wing (603) along a middle section of the wing span;
a right side wing tip rotor unit (606), wherein said right side wingtip rotor unit (606) is attached to the outboard tip of said right side wing (602); and
a left side wing tip rotor unit (606), wherein said left side wingtip rotor unit (606) is attached to the outboard tip of said left side wing (603);
wherein said one or more right and left side rotor assemblies (605) comprising articulating mechanisms adapted to deploy the rotor assemblies from a vertical thrust take-off orientation to a horizontal thrust flight orientation; and
wherein said right side wing tip rotor unit (606) and said left side wing tip rotor unit (606) are adapted to pivot to a vertical and a horizontal thrust orientation.

10. The aerial vehicle of claim 9 wherein each of said right and left side rotor assemblies (605) comprising a plurality of blades (612).

11. The aerial vehicle of claim 10 wherein each of said right and left side rotor assemblies (605) comprising a nacelle, wherein the blades (612) are adapted to stow into recesses in the nacelle.

12. The aerial vehicle of claim 10 or 11 wherein said blades (612) are pivotally attached to a rotor hub.

13. The aerial vehicle of claim 9 wherein said wing tip mounted rotor assemblies (606) comprising blades (613) which are variable pitch blades.

## Patentansprüche

1. Verfahren zum Betreiben eines Luftfahrzeugs (600), das für einen Senkrechtstart und einen horizontalen Flug ausgelegt ist, wobei das Verfahren die Schritte umfasst:
Schwenken einer Vielzahl von motorgetriebenen Propellereinheiten in eine Senkrechtschubkonfiguration;
Bereitstellen von Energie für die motorgetriebenen Propellereinheiten, wodurch die Propeller der motorgetriebenen Propellereinheiten gedreht werden;
Starten des Luftfahrzeugs vom Boden aus, wobei das Luftfahrzeug umfasst:
einen Hauptfahrzeugkörper (601);
einen rechten Seitenflügel (602), wobei der rechte Seitenflügel (602) mit einer rechten Seite des Hauptfahrzeugkörpers (601) gekoppelt ist, wobei der rechte Seitenflügel (602) einen vorwärts gerichteten Flügel umfasst;
wobei die motorgetriebenen Propellereinheiten eine oder mehrere rechtsseitige Rotorbaugruppen (605) mit Propellern und Elektromotoren umfassen, wobei eine oder mehrere Rotorbaugruppen (605) des rechten Seitenflügels am rechten Seitenflügel (602) befestigt sind, und wobei die eine oder die mehreren Rotorbaugruppen (605) des rechten Seitenflügels von der Vorderkante des rechten Seitenflügels (602) entlang eines mittleren Abschnitts der Flügelspanne nach vorn vorstehen, und
einen linken Seitenflügel (603), wobei der linke Seitenflügel (603) mit einer linken Seite des Hauptfahrzeugkörpers (601) gekoppelt ist, wobei der linke Seitenflügel (603) einen vorwärts gerichteten Flügel umfasst;
wobei die motorgetriebenen Propellereinheiten ferner eine oder mehrere linksseitige Rotorbaugruppen (605) mit Propellern und Elektromotoren umfassen, wobei eine oder mehrere Rotorbaugruppen (605) des linken Seitenflügels am linken Seitenflügel (603) befestigt sind, und wobei die eine oder die mehreren Rotorbaugruppen (605) des linken Seitenflügels von der Vorderkante des linken Seitenflügels (603) entlang eines mittleren Abschnitts der Flügelspanne nach vorn vorstehen;
wobei die motorgetriebenen Propellereinheiten ferner umfassen:
eine rechte Flügelspitzen-Rotoreinheit (606), wobei die rechte Flügelspitzen-Rotoreinheit (606) an der Außenspitze des rechten Seitenflügels (602) befestigt ist; und
eine linke Flügelspitzen-Rotoreinheit (606), wobei die linke Flügelspitzen-Rotoreinheit (606) an der Außenspitze des linken Seitenflügels (603) befestigt ist;
wobei die eine oder die mehreren rechts- und linksseitigen Rotorbaugruppen (605) Gelenkmechanismen umfassen, die dazu ausgelegt sind, die Rotorbaugruppen von der Senkrechtschubstartorientierung in eine Horizontalschubflugorientierung auszufahren; und
wobei die rechte Flügelspitzen-Rotoreinheit (606) und die linke Flügelspitzen-Rotoreinheit (606) dazu ausgelegt sind, in die Senkrecht- und Horizontalschuborientierung zu schwenken;
Überführen der Vielzahl von durch einen Motor angetriebenen Propellereinheiten von der Senkrechtschubkonfiguration in Richtung der horizontalen Konfiguration, wodurch horizontale Geschwindigkeit für das Luftfahrzeug gewonnen wird; und
Fliegen des Luftfahrzeugs in einer Vorwärtsflugkonfiguration.

2. Verfahren nach Anspruch 1, das ferner den Schritt der Unterbrechung der Energieversorgung zu einigen oder allen der Vielzahl von motorgetriebenen Propellereinheiten umfasst.

3. Verfahren nach Anspruch 2, das ferner den Schritt des Einfahrens der Propellerblätter (612, 613) von einigen oder allen der Propeller der motorgetriebenen Propellereinheiten umfasst, während das Luftfahrzeug (600) in einer Vorwärtsflugkonfiguration geflogen wird.

4. Verfahren nach Anspruch 3, wobei der Schritt des Einfahrens der Propellerblätter (612, 613) von einigen oder allen der Propeller das Einfahren der Propellerblätter (612, 613) in Aussparungen an den äußeren Oberflächen der Gondeln der motorgetriebenen Propellereinheiten umfasst.

5. Verfahren nach Anspruch 3, das ferner den Schritt des erneuten Ausfahrens der eingefahrenen Propellerblätter (612, 613) zur Vorbereitung auf eine senkrechte Landung umfasst.

6. Verfahren nach Anspruch 5, das ferner das Bereitstellen von Energie zu den vorher eingefahrenen Propellern umfasst.

7. Verfahren nach Anspruch 6, das ferner den Schritt des Überführens der Vielzahl von motorgetriebenen Propellereinheiten von einer horizontalen Konfiguration in Richtung einer Senkrechtschubkonfiguration umfasst, wodurch die horizontale Geschwindigkeit des Luftfahrzeugs (600) verringert wird.

8. Verfahren nach Anspruch 7, das ferner den Schritt des senkrechten Landens des Luftfahrzeugs (600) umfasst.

9. Luftfahrzeug (600), das für einen Senkrechtstart und horizontalen Flug ausgelegt ist, wobei das Luftfahrzeug umfasst:
einen Hauptfahrzeugkörper (601);
einen rechten Seitenflügel (602), wobei der rechte Seitenflügel (602) mit einer rechten Seite des Hauptfahrzeugkörpers (601) gekoppelt ist, wobei der rechte Seitenflügel (602) einen vorwärts gerichteten Flügel umfasst;
einen linken Seitenflügel (603), wobei der linke Seitenflügel (603) mit einer linken Seite des Hauptfahrzeugkörpers (601) gekoppelt ist, wobei der linke Seitenflügel (603) einen vorwärts gerichteten Flügel umfasst;
eine oder mehrere rechtsseitige Rotorbaugruppen (605) mit Propellern und Elektromotoren, wobei eine oder mehrere Rotorbaugruppen (605) des rechten Seitenflügels am rechten Seitenflügel (602) befestigt sind, und wobei die eine oder die mehreren Rotorbaugruppen (605) des rechten Seitenflügels von der Vorderkante des rechten Seitenflügels (602) entlang eines mittleren Abschnitts der Flügelspanne nach vorn vorstehen; und
eine oder mehrere linksseitige Rotorbaugruppen (605) mit Propellern und Elektromotoren, wobei eine oder mehrere Rotorbaugruppen (605) des linken Seitenflügels am linken Seitenflügel (603) befestigt sind, und wobei die eine oder die mehreren Rotorbaugruppen (605) des linken Seitenflügels von der Vorderkante des linken Seitenflügels (603) entlang eines mittleren Abschnitts der Flügelspanne nach vorn vorstehen;
eine rechte Flügelspitzen-Rotoreinheit (606), wobei die rechte Flügelspitzen-Rotoreinheit (606) an der Außenspitze des rechten Seitenflügels (602) befestigt ist; und
eine linke Flügelspitzen-Rotoreinheit (606), wobei die linke Flügelspitzen-Rotoreinheit (606) an der Außenspitze des linken Seitenflügels (603) befestigt ist;
wobei die eine oder die mehreren rechts- und linksseitigen Rotorbaugruppen (605) Gelenkmechanismen umfassen, die dazu ausgelegt sind, die Rotorbaugruppen von einer Senkrechtschubstartorientierung in eine Horizontalschubflugorientierung auszufahren; und
wobei die rechte Flügelspitzen-Rotoreinheit (606) und die linke Flügelspitzen-Rotoreinheit (606) dazu ausgelegt sind, in eine Senkrecht- und eine Horizontalschuborientierung zu schwenken.

10. Luftfahrzeug nach Anspruch 9, wobei jede der rechts- und linksseitigen Rotorbaugruppen (605) eine Vielzahl von Blättern (612) umfasst.

11. Luftfahrzeug nach Anspruch 10, wobei jede der rechts- und linksseitigen Rotorbaugruppen (605) eine Gondel umfasst, wobei die Blätter (612) dazu ausgelegt sind, in Aussparungen in der Gondel einzufahren.

12. Luftfahrzeug nach Anspruch 10 oder 11, wobei die Blätter (612) schwenkbar an einer Rotornabe befestigt sind.

13. Luftfahrzeug nach Anspruch 9, wobei die an der Flügelspitze montierten Rotorbaugruppen (606) Blätter (613) umfassen, die Blätter mit variabler Steigung sind.

## Revendications

1. Procédé pour faire fonctionner un véhicule aérien (600) adapté pour un décollage vertical et un vol horizontal, ledit procédé comportant les étapes consistant à :
faire pivoter une pluralité d'unités à hélice entraînées par moteur jusqu'à une configuration de traction verticale ;
fournir de la puissance auxdites unités à hélice entraînées par moteur, en faisant ainsi tourner les hélices desdites unités à hélice entraînées par moteur ;
faire décoller l'aéronef à partir du sol, dans lequel ledit aéronef comporte :
un corps de véhicule principal (601) ;
une aile côté droit (602), ladite aile côté droit (602) étant couplée à un côté droit dudit corps de véhicule principal (601), ladite aile côté droit (602) comportant une aile en flèche avant ;
lesdites unités à hélice entraînées par moteur comportant un ou plusieurs ensembles de rotor côté droit (605) comportant des hélices et des moteurs électriques, dans lequel un ou plusieurs ensembles de rotor d'aile côté droit (605) sont fixés à ladite aile côté droit (602), et dans lequel ledit ou lesdits ensembles de rotor d'aile côté droit (605) font saillie à l'avant du bord d'attaque de ladite aile côté droit (602) le long d'une section centrale de l'envergure d'aile, et
une aile côté gauche (603), ladite aile côté gauche (603) étant couplée à un côté gauche dudit corps de véhicule principal (601), ladite aile côté gauche (603) comportant une aile en flèche avant ;
lesdites unités à hélice entraînées par moteur comportant un ou plusieurs ensembles de rotor côté gauche (605) comportant des hélices et des moteurs électriques, dans lequel un ou plusieurs ensembles de rotor d'aile côté gauche (605) sont fixés à ladite aile côté gauche (603), et dans lequel ledit ou lesdits ensembles de rotor d'aile côté gauche (605) font saillie à l'avant du bord d'attaque de ladite aile côté gauche (603) le long d'une section centrale de l'envergure d'aile ;
lesdites unités à hélice entraînées par moteur comportant en outre :
une unité de rotor de bout d'aile côté droit (606), dans lequel ladite unité de rotor de bout d'aile côté droit (606) est fixée au bout extérieur de ladite aile côté droit (602) ; et
une unité de rotor de bout d'aile côté gauche (606), dans lequel ladite unité de rotor de bout d'aile côté gauche (606) est fixée au bout extérieur de ladite aile côté gauche (603) ;
dans lequel ledit ou lesdits ensembles de rotor côtés droit et gauche (605) comportent des mécanismes d'articulation adaptés pour déployer les ensembles de rotor de ladite orientation de décollage par traction verticale à une orientation de vol par traction horizontale ; et
dans lequel ladite unité de rotor de bout d'aile côté droit (606) et ladite unité de rotor de bout d'aile côté gauche (606) sont adaptées pour pivoter jusqu'à ladite orientation de traction verticale et horizontale ;
faire passer la pluralité d'unités à hélice entraînées par moteur de ladite configuration de traction verticale vers ladite configuration horizontale, en augmentant ainsi la vitesse horizontale de l'aéronef ; et
faire voler l'aéronef dans une configuration de vol vers l'avant.

2. Procédé selon la revendication 1, comportant en outre l'étape consistant à arrêter la fourniture de puissance à tout ou partie de la pluralité d'unités à hélice entraînées par moteur.

3. Procédé selon la revendication 2, comportant en outre l'étape consistant à escamoter les pales d'hélice (612, 613) de tout ou partie des hélices des unités à hélice entraînées par moteur tout en faisant voler l'aéronef (600) dans une configuration de vol vers l'avant.

4. Procédé selon la revendication 3, dans lequel l'étape consistant à ranger les pales d'hélice (612, 613) de tout ou partie des hélices comporte l'escamotage des pales d'hélice (612, 613) dans des logements sur les surfaces extérieures des nacelles des unités à hélice entraînées par moteur.

5. Procédé selon la revendication 3, comportant en outre l'étape consistant à redéployer les pales d'hélice (612, 613) escamotées en préparation d'un atterrissage vertical.

6. Procédé selon la revendication 5, comportant en outre la fourniture de puissance aux hélices précédemment escamotées.

7. Procédé selon la revendication 6, comportant en outre l'étape consistant à faire passer la pluralité d'unités à hélice entraînées par moteur depuis une configuration horizontale vers une configuration de traction verticale, en réduisant ainsi la vitesse horizontale de l'aéronef (600).

8. Procédé selon la revendication 7, comportant en outre l'étape consistant à faire atterrir verticalement l'aéronef (600).

9. Véhicule aérien (600) adapté pour un décollage vertical et un vol horizontal, ledit véhicule aérien comportant :
un corps de véhicule principal (601) ;
une aile côté droit (602), ladite aile côté droit (602) étant couplée à un côté droit dudit corps de véhicule principal (601), ladite aile côté droit (602) comportant une aile en flèche avant ;
une aile côté gauche (603), ladite aile côté gauche (603) étant couplée à un côté gauche dudit corps de véhicule principal (601), ladite aile côté gauche (603) comportant une aile en flèche avant ;
un ou plusieurs ensembles de rotor côté droit (605) comportant des hélices et des moteurs électriques, dans lequel un ou plusieurs ensembles de rotor d'aile côté droit (605) sont fixés à ladite aile côté droit (602), et dans lequel ledit ou lesdits ensembles de rotor d'aile côté droit (605) font saillie à l'avant du bord d'attaque de ladite aile côté droit (602) le long d'une section centrale de l'envergure d'aile ; et
un ou plusieurs ensembles de rotor côté gauche (605) comportant des hélices et des moteurs électriques, dans lequel un ou plusieurs ensembles de rotor d'aile côté gauche (605) sont fixés à ladite aile côté gauche (603), et dans lequel ledit ou lesdits ensembles de rotor d'aile côté gauche (605) font saillie à l'avant du bord d'attaque de ladite aile côté gauche (605) le long d'une section centrale de l'envergure d'aile ;
une unité de rotor de bout d'aile côté droit (606), dans lequel ladite unité de rotor de bout d'aile côté droit (606) est fixée au bout extérieur de ladite aile côté droit (602) ; et
une unité de rotor de bout d'aile côté gauche (606), dans lequel ladite unité de rotor de bout d'aile côté gauche (606) est fixée au bout extérieur de ladite aile côté gauche (603) ;
dans lequel ledit ou lesdits ensembles de rotor côtés droit et gauche (605) comportent des mécanismes d'articulation adaptés pour déployer les ensembles de rotor d'une orientation de décollage par traction verticale à une orientation de vol par traction horizontale ; et
dans lequel ladite unité de rotor d'aile côté droit (606) et ladite unité de rotor de bout d'aile côté gauche (606) sont adaptées pour pivoter jusqu'à une orientation de traction verticale et horizontale.

10. Véhicule aérien selon la revendication 9, dans lequel chacun desdits ensembles de rotor côtés droit et gauche (605) comporte une pluralité de pales (612).

11. Véhicule aérien selon la revendication 10, dans lequel chacun desdits ensembles de rotor côtés droit et gauche (605) comporte une nacelle, dans lequel les pales (612) sont adaptées pour être escamotées dans des logements situés dans la nacelle.

12. Véhicule aérien selon la revendication 10 ou 11, dans lequel lesdites pales (612) sont fixées à un moyeu de rotor de manière pivotante.

13. Véhicule aérien selon la revendication 9, dans lequel lesdits ensembles de rotor montés en bout d'aile (606) comportent des pales (613) qui sont des pales à pas variable.
